# EUROPEAN PATENT APPLICATION

(11) **EP 2 334 115 A1**
(43) Date of publication of application: **15.06.2011**
(21) Application number: 09814559.2
(22) Date of filing: 14.09.2009
(51) Int. Cl.: H04W 28/04, H04J 11/00, H04L 1/16, H04W 72/04

(54) **MOBILE COMMUNICATION SYSTEM, BASE STATION DEVICE, MOBILE STATION DEVICE, AND COMMUNICATION METHOD**

(30) Priority: 17.09.2008 JP 2008238675
(71) Applicant: Sharp Kabushiki Kaisha, Osaka-shi, Osaka 545-8522 (JP)
(72) Inventor: AIBA, Tatsushi, Osaka-shi, Osaka 545-8522 (JP); YAMADA, Shohei, Osaka-shi, Osaka 545-8522 (JP)
(74) Representative: Müller - Hoffmann & Partner
(86) International application number: PCT/JP2009/066044
(87) International publication number: WO 2010/032714

(57) **Abstract**

When a base station apparatus and a mobile station apparatus perform communication using a wider system band consists of carrier components, the base station apparatus and the mobile station apparatus flexibly use all the carrier components to perform efficient HARQ processing. A mobile communication system includes a base station apparatus and a mobile station apparatus, and the base station apparatus and the mobile station apparatus transmit and receive downlink transport block on each of carrier components and perform HARQ (Hybrid Automatic Repeat Request) processing in each of carrier components using a unified HARQ process number in a band consists of multiple carrier components.

## Description

### Technical Field

The present invention relates to a mobile communication system including a base station apparatus and a mobile station apparatus, and a communication method.

### Background Art

3GPP (3rd Generation Partnership Project) is a project to discuss/create specifications of a mobile communication system based on networks of evolved W-CDMA (Wideband-Code Division Multiple Access) and GSM (Global System for Mobile Communications). In 3GPP, the W-CDMA system has been standardized as the third generation cellular mobile communication system and its services have been launched sequentially. Further, HSDPA (High-speed Downlink Packet Access) with the communication speed further increased has also been standardized and its services are launched. In 3GPP, the evolution of the third generation radio access technology (hereinafter, referred to as "LTE (Long Term Evolution)" or "EUTRA (Evolved Universal Terrestrial Radio Access)") and a mobile communication system (hereinafter, referred to as "LTE-A (Long Term Evolution-Advanced" or "Advanced-EUTRA") that utilizes a wider system band to achieve faster data transmission and reception are discussed.

As a communication system in LTE, an OFDMA (Orthogonal Frequency Multiple Access) system and a SC-FDMA (Single Carrier-Frequency Domain Multiple Access) system that use subcarriers orthogonal to each other to perform user multiplexing are discussed. Meanwhile, in a downlink, the OFDMA system, which is a multi-carrier communication system, is proposed; in an uplink, the SC-FDMA system, which is a single-carrier communication system, is proposed.

On the other hand, it is proposed that, as a communication system in LTE-A, in a downlink, the OFDMA system be introduced, and, in an uplink, in addition to the SC-FDMA system, which is a single-carrier communication system, the OFDMA system, which is a multi-carrier communication system, and a Clustered-SC-FDMA (Clustered-Single Carrier-Frequency Domain Multiple Access, also called DFT-S-OFDM with Spectrum Division Control) system be introduced (non-patent documents 1 and 2). The SC-FDMA system examined as an uplink communication system in LTE or LTE-A has the feature of lowering a PAPR (Peak to Average Power Ratio) when transmitting data.

It is also proposed that although a frequency band used in a general mobile communication system is continuous, in LTE-A, multiple continuous/non-continuous frequency bands (hereinafter, referred to as a "carrier component" or "component carrier") be used in a composite manner and utilized as one system band (wider system band) (also referred to as spectrum aggregation, carrier aggregation, frequency aggregation, etc.). Moreover, it is proposed that, in order for the base station apparatus and the mobile station apparatus to use more flexibly a system band assigned to perform communication, a frequency band used in downlink communication and a frequency band used in uplink communication have different frequency bandwidths (non-patent document 3).

Further, in LTE-A, it is also proposed to apply ACK/NACK (Positive Acknowledgement / Negative Acknowledgement, ACK signal, or NACK signal) of HARQ (Hybrid Automatic Repeat Request) transmitted by the mobile station apparatus in the uplink for the downlink transmission from the base station apparatus on each carrier component constituting a wider system band (Non-patent Document 4). That is, the proposal is that (the unit of) data transmitted/received through a downlink transport channel (hereinafter, referred to as a "transport block") is transmitted on each carrier component and the base station apparatus and the mobile station apparatus independently perform the HARQ processing for the downlink transport block in each carrier component.

It is also proposed by Non-patent Document 4 that only one downlink transport block is transmitted in the wider system band and the base station apparatus and the mobile station apparatus perform the HARQ processing for the one transport block transmitted.

Next, the HARQ processing in LTE is described. HARQ is a method of increasing the reception success rate at the time of retransmission by combining information retransmitted and information previously transmitted. In HARQ, methods of combining information retransmitted and information previously transmitted include two kinds of method, that is, a Chase combine in which the same information as the information transmitted previously is transmitted (retransmitted) and the powers are combined on the reception side, and Incremental Redundancy in which information not transmitted previously is added and transmitted (retransmitted). In either combining method of the chase combine and the incremental redundancy, initially transmitted data and retransmitted data are generated by the same transport block.

Here, redundancy version information (hereinafter, also referred to as "RV (Redundancy Version") is attached to the initially transmitted data and a plurality of pieces of retransmitted data (retransmission is performed a plurality of times until decode of the transport block succeeds) generated by the same transport block and the redundancy version is notified from the base station apparatus to the mobile station apparatus, and thereby, the mobile station apparatus can combine the initially transmitted data and the retransmitted data.

Further, one HARQ process number (hereinafter, also referred to as "HARQ-PN (HARQ-Process Number)" is attached to the HARQ processing for one transport block and multiple HARQ processings can be performed in parallel. That is, before the HARQ processing attached with a certain process number is completed, the HARQ processing attached with another process number is initiated and thus the respective HARQ processings can be performed in parallel.

The HARQ processing for the downlink is asynchronous HARQ (referred to as "A-synchronous HARQ"), and therefore, the respective HARQ processings can operate in any TTI (Transmission Time Interval) and in any subframe after the round trip time without depending on the transmission timing of the initially transmitted data. However, only one transport block can be transmitted in one TTI (in one subframe), and therefore, multiple HARQ processings cannot be performed at the same time in one TTI (in one subframe).

In the HARQ processing for the downlink, the mobile station apparatus specifies the HARQ processing according to the HARQ process number included in a physical downlink control channel (hereinafter, referred to as "PDCCH", the channel will be described later).

Next, the operation of the HARQ processing for the downlink is described. The mobile station apparatus determines whether or not the transmission is the transmission of the initially transmitted data depending on whether new data indicator information (hereinafter, also referred to as "NDI") included in PDCCH from the base station apparatus is toggled. For example, whether or not the transmission is the transmission of the initially transmitted data is determined depending on whether NDI switches from 0 to 1 or from 1 to 0.

When the initially transmitted data is transmitted, the mobile station apparatus further specifies the size of the transport block (transport block size) according to resources allocation information and MSC (Modulation and Coding system) information included in PDCCH and takes in the transport block transmitted from the base station apparatus using a physical downlink shared channel (hereinafter, referred to as PDSCH, the channel will be described later) into a buffer. Then, the mobile station apparatus performs CRC (Cyclic Redundancy Check) on the transport block received for the data in the buffer and determines success/failure of decode of the transport block received.

When the retransmitted data is transmitted, the mobile station apparatus further specifies redundancy version information (RV) included in PDCCH, performs the chase combine and/or incremental redundancy according to RV to take in the transport block into the buffer, and performs the CRC on the transport block for the combined data in the buffer, and thereby, determines success/failure of decode of the transport block received.

Here, RV included in PDCCH from the base station apparatus is transmitted to the mobile station apparatus, for example, as 2-bit information, the HARQ process number as 3-bit information, and NDI as 1-bit information. Non-patent Document 1: "UL Access Scheme for LTE-Advanced", 3GPP TSG RAN WG1 Meeting #53-bis, R1-082365, June 30-July 4, 2008.
Non-patent Document 2: "Consideration on Multicarrier Transmission scheme for LTE Adv uplink", 3GPP TSG RAN WG1 Meeting #53-bis, R1-082398, June 30-July 4, 2008. Non-patent Document 3: "Proposals for LTE-Advanced Technologies", 3GPP TSG RAN WG1 Meeting #53-bis, R1-082575, June 30-July 4, 2008.
Non-patent Document 4: "Carrier aggregation in LTE-Advanced", 3GPP TSG RAN WG1 Meeting #53-bis, R1-082468, June 30-July 4, 2008.

### Disclosure of the Invention

However, in the prior art, the base station apparatus and the mobile station apparatus allocate one downlink transport block on each carrier component constituting a wider system band and perform the HARQ processing independently in each carrier component, and therefore, the retransmission of the downlink transport block can be performed only on one corresponding carrier component. That is, despite that the base station apparatus and the mobile station apparatus have the capability to perform communication using a wider system band, it is not possible to retransmit the downlink transport block by flexibly using the wider system band.

Further, the base station apparatus and the mobile station apparatus allocate one downlink transport block in the wider system band and perform the HARQ processing, and therefore, it is necessary to transmit a very large-sized transport block (that can be transmitted using the wider system band) for each retransmission of the downlink transport block. That is, the base station apparatus and the mobile station apparatus need to transmit/receive a very large-sized transport block at all times and it is not possible to retransmit the downlink transport block by efficiently using the wider system band.

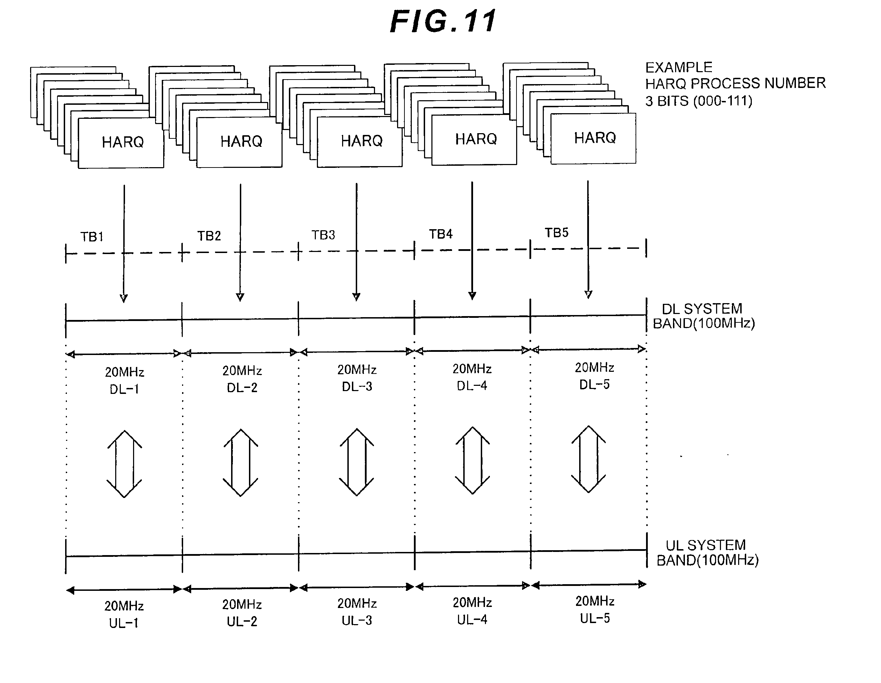

Fig. 11 is a diagram for explaining the prior art, showing the uplink system bands and the downlink system band. In Fig. 11, as to the downlink, a system band having a bandwidth of 100 MHz is shown as an example. Hereinafter, this band is referred to as a "DL system band". In Fig. 11, the DL system band is constituted of five carrier components (DL-1, DL-2, DL-3, DL-4 and DL-5) each having a bandwidth of 20 MHz. On the other hand, as to the uplink, a system band having a bandwidth of 100 MHz is shown as an example. Hereinafter, this band is referred to as an "UL system band". In Fig. 11, the UL system band is constituted of five carrier components (UL-1, UL-2, UL-3, UL-4 and UL-5) each having a bandwidth of 20 MHz.

As shown in Fig. 11, in the prior art, the base station apparatus and the mobile station apparatus perform communication such that the downlink carrier components and the uplink carrier components correspond to each other, and perform the HARQ processing in one carrier component caused to correspond (in the corresponding carrier component). Fig. 11 shows how the communication is performed such that DL-1, DL-2, DL-3, DL-4 and DL-5 correspond to UL-1, UL-2, UL-3, UL-4 and UL-5, respectively as a specific example. The base station apparatus and the mobile station apparatus allocate one downlink transport block (TB1, TB2, TB3, TB4 and TB5) on each carrier component caused to correspond and perform the HARQ processing independently. That is, the base station apparatus and the mobile station apparatus perform the HARQ processing for TB1 in DL-1 and UL-1 and similarly, perform the HARQ processing for TB2 in DL-2 and UL-2, perform the HARQ processing for TB3 in DL-3 and UL-3, perform the HARQ processing for TB4 in DL-4 and UL-4, and perform the HARQ processing for TB5 in DL-5 and UL-5.

As described above, in the prior art, the base station apparatus and the mobile station apparatus perform the HARQ processing independently in each carrier component caused to correspond, and therefore, the retransmission of the downlink transport block can be performed only on one carrier component caused to correspond. For example, the base station apparatus and the mobile station apparatus can use only DL-2 and UL-2 when performing the HARQ processing for TB2. That is, in the prior art, it is not possible to perform the transmission of the downlink transport block by flexibly using the wider system band.

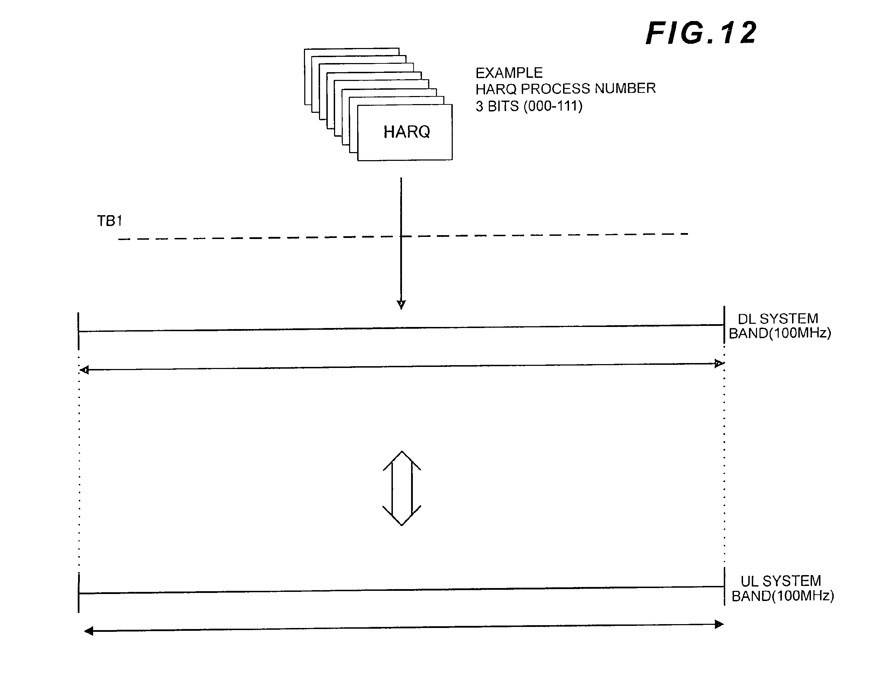

Fig. 12 is a diagram for explaining the prior art, showing the uplink and downlink system bands. In the mobile communication system shown in Fig. 12, for example, the DL system band has a bandwidth of 100 MHz and the UL system band has a bandwidth of 100 MHz. As shown in Fig. 12, in the prior art, the base station apparatus and the mobile station apparatus allocate one downlink transport block (TB1) on the DL system band and the UL system band and perform the HARQ processing. Here, in the DL system band and the UL system band, the frequency bandwidth is wider (here, the system bands having a frequency bandwidth of 100 MHz, respectively, are shown) and it is possible to transmit/receive a very large-sized transport block. That is, in the prior art, the base station apparatus and the mobile station apparatus perform the HARQ processing for a very large-sized transport block (TB1) and it is necessary for the base station apparatus and the mobile station apparatus to transmit/receive the large-sized transport block (TB1) each time the retransmission of the large-sized transport block (TB1) occurs.

As described above, in the prior art, for the wider system band (DL system band, UL system band), one downlink transport block is allocated and the HARQ processing is performed, and therefore, each time the retransmission of a large-sized transport block (TB1) occurs, it is necessary for the base station apparatus and the mobile station apparatus to transmit/receive the large-sized transport block (TB1) and it is not possible to transmit the downlink transport block by efficiently using the wider system band.

The present invention has been made in view of such circumstances and an object thereof is to provide a mobile communication system, a base station apparatus, and a mobile station apparatus having capability of efficiently performing the HARQ processing by flexibly using all carrier components and/or carrier component groups when the base station apparatus and the mobile station apparatus perform communication using a wider system band consists of the carrier components and/or carrier component groups.

(1) In order to achieve the above-mentioned object, the present invention took measures as described below. That is, a mobile communication system of the present invention is a mobile communication system in which a base station apparatus and a mobile station apparatus perform communication on multiple component carriers which are aggregated, wherein the base station apparatus and the mobile station apparatus transmit and receive downlink transport block on each of component carriers, and perform HARQ processing in each of component carriers using a unified HARQ process number in a band consists of the multiple component carriers.

(2) A base station apparatus of the present invention is a base station apparatus in a mobile communication system in which a base station apparatus and a mobile station apparatus perform communication on multiple component carriers which are aggregated, the base station apparatus comprising: a unit which transmits and receives, to and from the mobile station apparatus, downlink transport block on each of component carriers, wherein the base station apparatus performs HARQ processing in each of the component carriers using a unified HARQ process number in a band consists of the multiple component carriers.

(3) A mobile station apparatus of the present invention is a mobile station apparatus in a mobile communication system in which a base station apparatus and a mobile station apparatus perform communication on multiple component carriers which are aggregated, the mobile station apparatus comprising: a unit which transmits and receives, to and from the base station apparatus, downlink transport block on each of component carriers, wherein the mobile station apparatus performs HARQ processing in each of the component carriers using a unified HARQ process number in a band consists of the multiple component carriers.

(4) A communication method of the present invention is a communication method of a base station apparatus in a mobile communication system in which a base station apparatus and a mobile station apparatus perform communication on multiple component carriers which are aggregated, the method comprising: transmitting and receiving, to and from the mobile station apparatus, downlink transport block on each of component carriers; and performing HARQ processing in each of the component carriers using a unified HARQ process number in a band consists of the multiple component carriers.

(5) A communication method of the present invention is a communication method of a mobile station apparatus in a mobile communication system in which a base station apparatus and a mobile station apparatus perform communication on multiple component carriers which are aggregated, the method comprising: transmitting and receiving, to and from the base station apparatus, downlink transport block on each of component carriers; and performing HARQ processing in each of the component carriers using a unified HARQ process number in a band consists of the multiple component carriers.

According to the present invention, the base station apparatus and the mobile station apparatus transmit/receive the downlink transport block on each carrier component and perform the HARQ processing in each carrier component using a unified HARQ process number in a band consists of multiple carrier components, and therefore, it is made possible to perform efficient HARQ processing by flexibly using all the carrier components.

### Brief Description of the Drawings

Fig. 1 is a diagram showing downlink channels in an embodiment of the present invention.
Fig. 2 is a diagram showing uplink channels in an embodiment of the present invention.
Fig. 3 is a diagram conceptually showing a configuration of physical channels.
Fig. 4 is a block diagram showing a schematic configuration of a base station apparatus according to an embodiment of the present invention.
Fig. 5 is a block diagram showing a schematic configuration of a mobile station apparatus according to an embodiment of the present invention.
Fig. 6 is a diagram showing an example of a mobile communication system to which an embodiment of the present invention can be applied.
Fig. 7 is a diagram showing an example of a mobile communication system to which an embodiment of the present invention can be applied.
Fig. 8 is a diagram showing an example of a mobile communication system to which an embodiment of the present invention can be applied.
Fig. 9 is a diagram showing an example of a processing procedure of a base station apparatus and a mobile station apparatus.
Fig. 10 is a diagram showing the operation of a mobile station apparatus in a second embodiment.
Fig. 11 is a diagram for explaining a prior art.
Fig. 12 is a diagram for explaining another prior art.

- 100: base station apparatus
- 101: data control portion
- 102: transmission data modulation portion
- 103: radio portion
- 104: scheduling portion
- 105: channel estimation portion
- 106: reception data demodulation portion
- 107: data extraction portion
- 108: higher layer
- 109: antenna
- 110: radio resource control portion
- 200: mobile station apparatus
- 201: data control portion
- 202: transmission data modulation portion
- 203: radio portion
- 204: scheduling portion
- 205: channel estimation portion

- 206: reception data demodulation portion
- 207: data extraction portion
- 208: higher layer
- 209: antenna
- 210: radio resource control portion

### Best Modes for Carrying Out the Invention

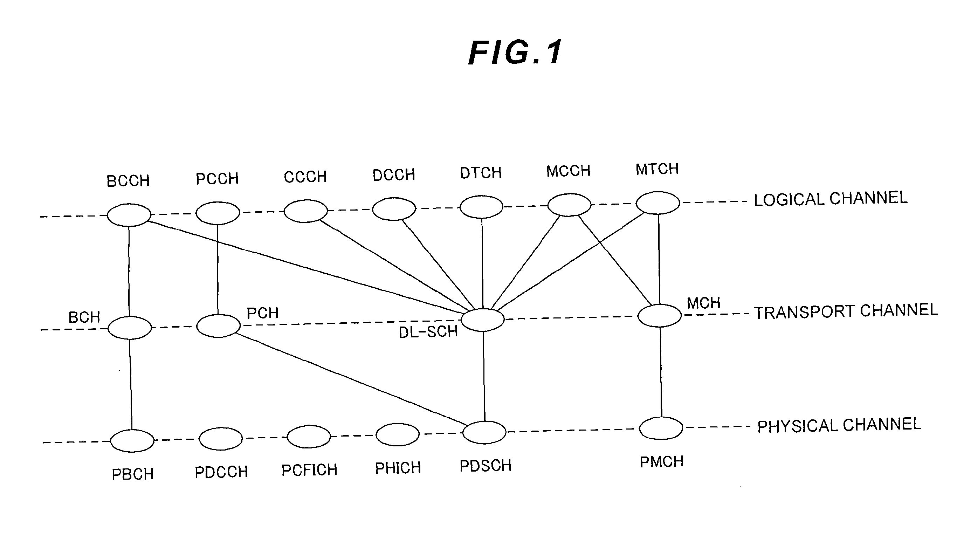

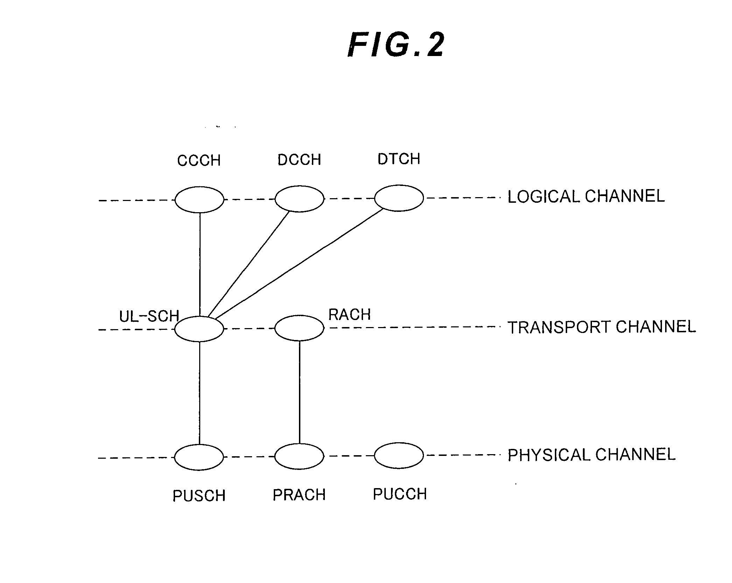

Next, an embodiment according to the present invention will be described with reference to the drawings. Fig. 1 and Fig. 2 are diagrams each showing a channel configuration example in the embodiment of the present invention. As shown in Fig. 1 and Fig. 2, the channels in the embodiment of the present invention are classified into, for example, logical channels, transport channels, and physical channels and each channel is mapped as shown in Fig. 1 and Fig. 2. Fig. 1 shows channels on a downlink and Fig. 2 shows channels on an uplink. The logical channel defines the kind of transmission service of data transmitted/received in a medium access control (MAC) layer. The transport channel defines what characteristics data transmitted via a radio interface and how the data is transmitted. The physical channel is a physical channel to carry a transport channel.

The logical channel includes a broadcast control channel (BCCH), a paging control channel (PCCH), a common control channel (CCCH), a dedicated control channel (DCCH), a dedicated traffic channel (DTCH), a multicast control channel (MCCH), and a multicast traffic channel (MTCH).

The transport channel includes a broadcast channel (BCH), a paging channel (PCH), a downlink shared channel (DL-SCH), a multicast channel (MCH), an uplink shared channel (UL-SCH), and a random access channel (RACH).

The downlink physical channel is composed of a physical broadcast channel (PBCH), a physical downlink control channel (PDCCH), a physical downlink shared channel (PDSCH), a physical multicast channel (PMCH), a physical control format indicator channel (PCFICH), and a physical hybrid ARQ indicator channel (PHICH). The uplink physical channel is composed of a physical uplink shared channel (PUSCH), a physical uplink control channel (PUCCH), and a physical random access channel (PRACH).

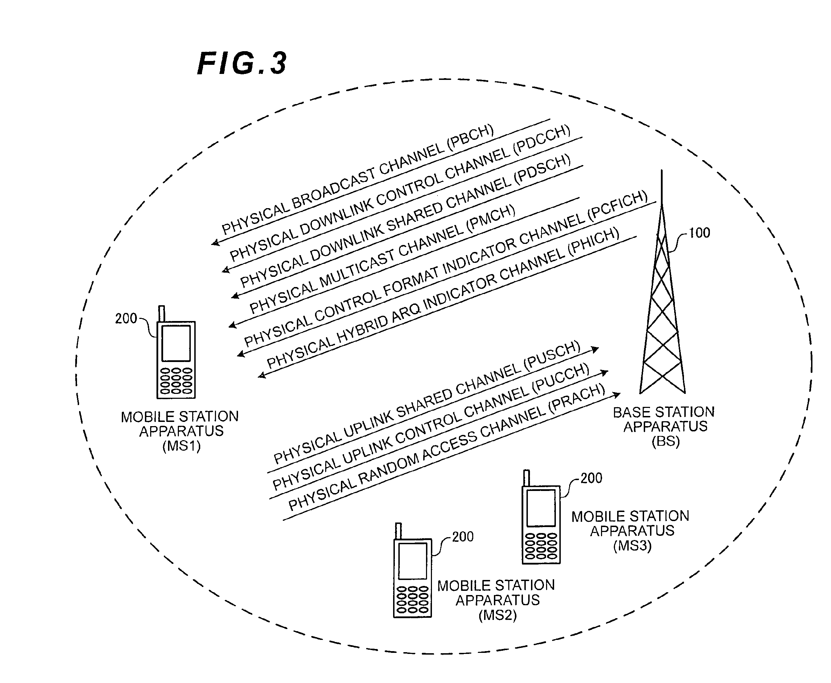

Fig. 3 is a diagram conceptually showing a configuration of the physical channels. These channels are transmitted and received between a base station apparatus and a mobile station apparatus. The physical broadcast channel (PBCH) maps the broadcast channel (BCH) at intervals of 40 ms. The timing of 40 ms is blind-detected (blind detection). That is, explicit signaling for presenting the timing is not performed. A subframe that includes the physical broadcast channel (PBCH) is self-decodable.

The physical downlink control channel (PDCCH) is a channel used to notify a mobile station apparatus of the resources allocation for the physical downlink shared channel (PDSCH), the uplink transmission permission of the resource allocation for the hybrid automatic repeat request (HARQ) information for the downlink data, and the uplink transmission permission of the resource allocation for the physical uplink shared channel (PUSCH).

When the PDCCH includes the resources allocation for the physical downlink shared channel, the mobile station apparatus receives data (downlink data, and/or, downlink control data) using the physical downlink shared channel (PDSCH) according to the resources allocation indicated by the PDCCH from the base station apparatus. That is, the PDCCH is a signal (hereinafter, referred to as a "downlink transmission permission signal" or "downlink grant") to perform the resources allocation for the downlink. When the PDCCH includes the resources allocation for the physical uplink shared channel, the mobile station apparatus transmits data (uplink data, and/or, uplink control data) using the physical uplink shared channel (PUSCH) according to the resources allocation indicated by the PDCCH from the base station apparatus. That is, the PDCCH is a signal (hereinafter, referred to as an "uplink transmission permission signal" or "uplink grant") to permit the data transmission for the uplink.

The physical downlink shared channel (PDSCH) is a channel used to transmit downlink data (downlink shared channel: DL-SCH) or paging information (paging channel: PCH). The physical multicast channel (PMCH) is a channel used to transmit the multicast channel (MCH) and the downlink reference signal, the uplink reference signal, and the physical downlink synchronization signal are allocated separately.

Here, the downlink data (DL-SCH) indicates, for example, transmission of user data and the DL-SCH is a transport channel. In the DL-SCH, HARQ, dynamic adaptive radio link control are supported and beam forming can be utilized. In the DL-SCH, dynamic resources allocation and semi-static resources allocation are supported.

The physical uplink shared channel (PUSCH) is a channel used to transmit uplink data (uplink shared channel: UL-SCH) mainly. When the base station apparatus schedules the mobile station apparatus, the control data to be explained below is also transmitted using the PUSCH. The control data includes channel state information such as the channel quality indicator (CQI) of the downlink, precoding matrix indicator (PMI), rank indicator (RI), and ACK/NACK of HARQ for the downlink transmission.

Here, the uplink data (UL-SCH) indicates, for example, transmission of user data and the UL-SCH is a transport channel. In the UL-SCH, the HARQ, the dynamic adaptive radio link control are supported and beam forming can be utilized. In the UL-SCH, the dynamic resources allocation and semi-static resources allocation are supported.

Further, in the uplink data (UL-SCH) and the downlink data (DL-SCH), radio resource control signal (hereinafter, referred to as "RRC signaling"), MAC (Medium Access Control) control element transmitted/received between the base station apparatus and the mobile station apparatus may be included.

The physical uplink control channel (PUCCH) is a channel used to transmit control data. Here, the control data includes, for example, the channel state information (CQI, PMI, RI) transmitted (fed back) from the mobile station apparatus to the base station apparatus, scheduling request (SR) for the mobile station apparatus to make a request for resources allocation for transmission of the uplink data (request for transmission by the UL-SCH), the ACK/NACK of HARQ for the downlink transmission, etc.

The channel state information (CQI, PMI and RI) transmitted (fed back) from the mobile station apparatus to the base station apparatus is explained. It is possible for the base station apparatus to realize more efficient communication by switching radio transmission parameters (hereinafter, referred to as "AMC (Adaptive Modulation and Coding) mode"), such as error correction scheme, coding rate of error correction, and data modulation order, according to the channel quality (reception quality) of each mobile station apparatus. The CQI (also referred to as channel quality indicator) is information indicative of the channel quality (reception quality) fed back from each mobile station apparatus to switch AMC to another and the mobile station apparatus feeds back the channel quality (reception quality) indicative of the quality of the signal received from the base station apparatus as the CQI to the base station apparatus.

Further, it is made possible for the base station apparatus and the mobile station apparatus to increase the communication path capacity by utilizing transmission diversity, such as SDM (Space Division Multiplexing) that utilizes MIMO (Multiple Input Multiple Output), SFBC (Space-Frequency Block Coding), or CDD (Cycle Delay Diversity). MIMO is a general term for a multiple-input/multiple-output system or technique and characterized by transmitting using a plurality of antennas on the transmission and the reception sides and by setting the number of branches of input/output of radio waves to two or more. The unit of a signal sequence that can be transmitted with space division multiplexing by utilizing the MIMO scheme is called a stream and the number of streams required by the mobile station apparatus at the time of the MIMO communication is transmitted (fed back) from the mobile station apparatus to the base station apparatus as the RI (Rank Indicator). When utilizing the SDM in the downlink, the transmission signal sequence is processed in advance (this is referred to as "precoding") in order to accurately separate information of a plurality of streams transmitted from each antenna. It is possible to calculate the information about precoding based on the channel state estimated by the mobile station apparatus and the information is transmitted (fed back) from the mobile station apparatus to the base station apparatus as the PMI (Precoding Matrix Indicator).

As described above, in order to realize communication of optimum quality, each mobile station apparatus transmits (feeds back) the channel state information (CQI, PMI and RI) to the base station apparatus using the PUCCH. For example, it is possible for the mobile station apparatus to periodically transmit (feed back) the channel state information using the PUCCH. As described previously, when the base station apparatus schedules a mobile station apparatus, the mobile station apparatus transmits the channel state information using the PUSCH. For example, it is possible for the mobile station apparatus to α-periodically transmit (feed back) the channel state information using the PUSCH by the scheduling of the base station apparatus.

The physical control format indicator channel (PCFICH) is a channel utilized to notify the mobile station apparatus of the number of OFDM symbols used for PDCCH and transmitted in each subframe. The physical hybrid ARQ indicator channel (PHICH) is a channel utilized to transmit ACK/NACK of HARQ for the uplink data. The physical random access channel (PRACH) is a channel used to transmit a random access preamble and has a guard time. As shown in Fig. 3, the mobile communication system according to the present embodiment includes a base station apparatus 100 and a mobile station apparatus 200.

### [Configuration of base station apparatus]

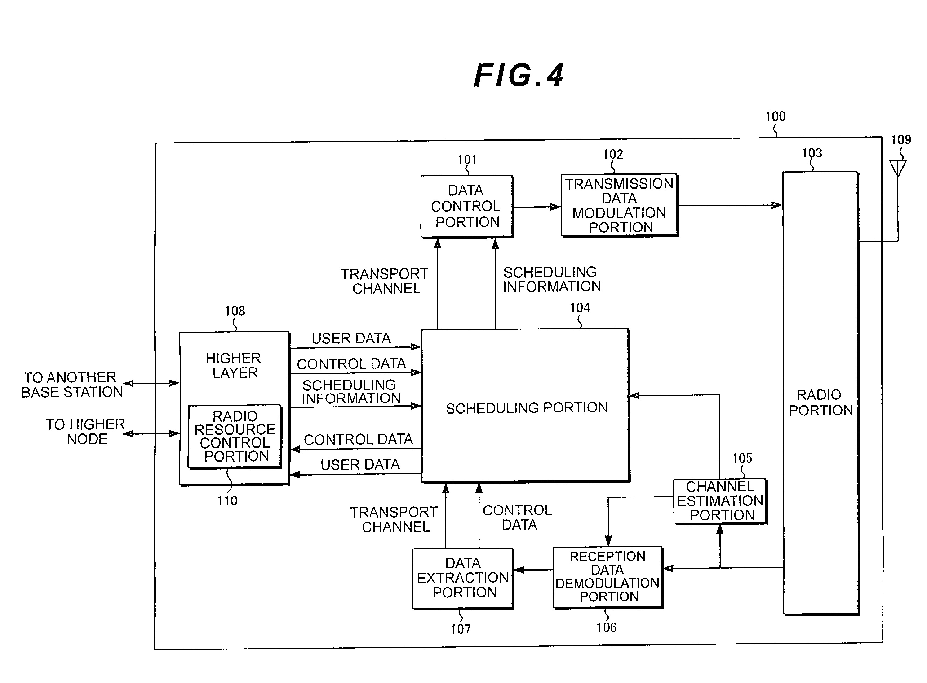

Fig. 4 is a block diagram showing a schematic configuration of the base station apparatus 100 according to the embodiment of the present invention. The base station apparatus 100 includes a data control portion 101, a transmission data modulation portion 102, a radio portion 103, a scheduling portion 104, a channel estimation portion 105, a reception data demodulation portion 106, a data extraction portion 107, a higher layer 108, and an antenna 109. The radio portion 103, the scheduling portion 104, the channel estimation portion 105, the reception data demodulation portion 106, the data extraction portion 107, the higher layer 108, and the antenna 109 constitute a receiving portion and the data control portion 101, the transmission data modulation portion 102, the radio portion 103, the scheduling portion 104, the higher layer 108, and the antenna 109 constitute a transmission portion.

The processing of the uplink physical layer is performed by the antenna 109, the radio portion 103, the channel estimation portion 105, the reception data demodulation portion 106, and the data extraction portion 107. The processing of the downlink physical layer is performed by the antenna 109, the radio portion 103, the transmission data modulation portion 102, and the data control portion 101.

The data control portion 101 receives a transport channel from the scheduling portion 104. The data control portion 101 maps the transport channel and a signal and a channel generated in the physical layer to the physical channel based on the scheduling information input from the scheduling portion 104. Each piece of data mapped as described above is output to the transmission data modulation portion 102.

The transmission data modulation portion 102 modulates transmission data in the OFDM system. The transmission data modulation portion 102 performs signal processing on the data input from the data control portion 101, such as data modulation, encoding, serial/parallel conversion of an input signal, IFFT (Inverse Fast Fourier Transform) processing, CP (Cyclic Prefix) insertion, and filtering based on the scheduling information from the scheduling portion 104, modulation scheme and coding scheme for each PRB, generates transmission data, and outputs the data to the radio portion 103. Here, the scheduling information includes downlink physical resource block (PRB) allocation information, for example, physical resource block positional information composed of frequency and time, and the modulation scheme and the coding scheme for each PRB include, for example, information about the modulation scheme: 16QAM, coding rate: 2/3 coding rate, etc.

The radio portion 103 generates a radio signal by up-converting the modulated data input from the transmission data modulation portion 102 into a radio frequency and transmits it to the mobile station apparatus 200 via the antenna 109. Further, the radio portion 103 receives the uplink radio signal from the mobile station apparatus 200 via the antenna 109, down-converts it into a base band signal, and outputs the received data to the channel estimation portion 105 and the reception data demodulation portion 106.

The scheduling portion 104 performs processing of a medium access control (MAC) layer. The scheduling portion 104 performs mapping of a logical channel and a transport channel, scheduling of the downlink and the uplink (HARQ processing, selection of transport format, etc.), etc. In the scheduling portion 104, in order to integrally control the processing portions in each physical layer, interfaces are present between the scheduling portion 104 and the antenna 109, the radio portion 103, the channel estimation portion 105, the reception data demodulation portion 106, the data control portion 101, the transmission data modulation portion 102 and the data extraction portion 107 (not shown schematically).

For the scheduling of the downlink, based on feedback information (such as the channel state information (CQI, PMI and RI) on the uplink and the ACK/NACK information for the downlink data) received from the mobile station apparatus 200, PRB information available to each mobile station apparatus, a buffer status, scheduling information input from the higher layer 108 and the like, the scheduling portion 104 performs processing for selecting a downlink transport format (transmission form, for example, physical resource block allocation, a modulation scheme and a coding scheme) so as to modulate individual pieces of data, performs retransmission control on HARQ and generates scheduling information used in the downlink. The scheduling information used for the scheduling of the downlink is output to the data control portion 101.

For the scheduling of the uplink, based on the result of estimation of an uplink channel state (radio transport path state) output by the channel estimation portion 105, resource allocation request from the mobile station apparatus 200, PRB information available to each mobile station apparatus, scheduling information input from the higher layer 108 and the like, the scheduling portion 104 performs processing for selecting an uplink transport format (transmission form, for example, physical resource block allocation, a modulation scheme and a coding scheme) so as to modulate individual pieces of data and generates scheduling information used for the scheduling of the uplink. The scheduling information used for the scheduling of the uplink is output to the data control portion 101.

The scheduling portion 104 maps the downlink logical channel input from the higher layer 108 on the transport channel, and outputs it to the data control portion 101. The scheduling portion 104 performs processing, as necessary, on the control data input from the data extraction portion 107 and received in the uplink and the transport channel, then maps them on the uplink logical channel and outputs them to the higher layer 108.

In order to demodulate the uplink data, the channel estimation portion 105 estimates the uplink channel state from an uplink demodulation reference signal (DRS), and outputs the result of the estimation to the reception data demodulation portion 106. In order to perform uplink scheduling, the channel estimation portion 105 also estimates the uplink channel state from an uplink sounding reference signal (SRS), and outputs the result of the estimation to the scheduling portion 104.

The reception data demodulation portion 106 also acts as an OFDM demodulation portion and/or a DFT-spread-OFDM (DFT-S-OFDM) demodulation portion that demodulate the reception data modulated in the OFDM system and/or the SC-FDMA system. Based on the result of estimation of the uplink channel state input from the channel estimation portion 105, the reception data demodulation portion 106 performs signal processing such as DFT transform, sub-carrier mapping, IFFT transform and filtering on modulation data input from the radio portion 103, to perform demodulation processing, and outputs it to the data extraction portion 107.

The data extraction portion 107 checks whether or not data input from the reception data demodulation portion 106 is right or wrong, and outputs the result of the check (positive signal ACK/negative signal NACK) to the scheduling portion 104. The data extraction portion 107 separates the data input from the reception data demodulation portion 106 into a transport channel and control data on a physical layer, and outputs them to the scheduling portion 104. The separated control data includes the channel state information (CQI, PMI and RI), the ACK/NACK information and the scheduling request notified from the mobile station apparatus 200.

The higher layer 108 performs processing on a packet data convergence protocol (PDCP) layer, a radio link control (RLC) layer and a radio resource control (RRC) layer. In the higher layer 108, in order to integrally control the processing portions in a lower layer, interfaces are present between the higher layer 108 and the scheduling portion 104, the antenna 109, the radio portion 103, the channel estimation portion 105, the reception data demodulation portion 106, the data control portion 101, the transmission data modulation portion 102 and the data extraction portion 107 (not shown schematically).

The higher layer 108 has a radio resource control portion 110 (also referred to as a "control portion"). The radio resource control portion 110 performs control on various types of setting information, system information, paging, the communication state of each mobile station apparatus, mobility such as handover, the buffer status of each mobile station apparatus, the connection setting of unicast and multicast bearers, a mobile station indicator (UEID) and the like. The higher layer 108 exchanges information with another base station apparatus and a higher node.

### [Configuration of mobile station apparatus]

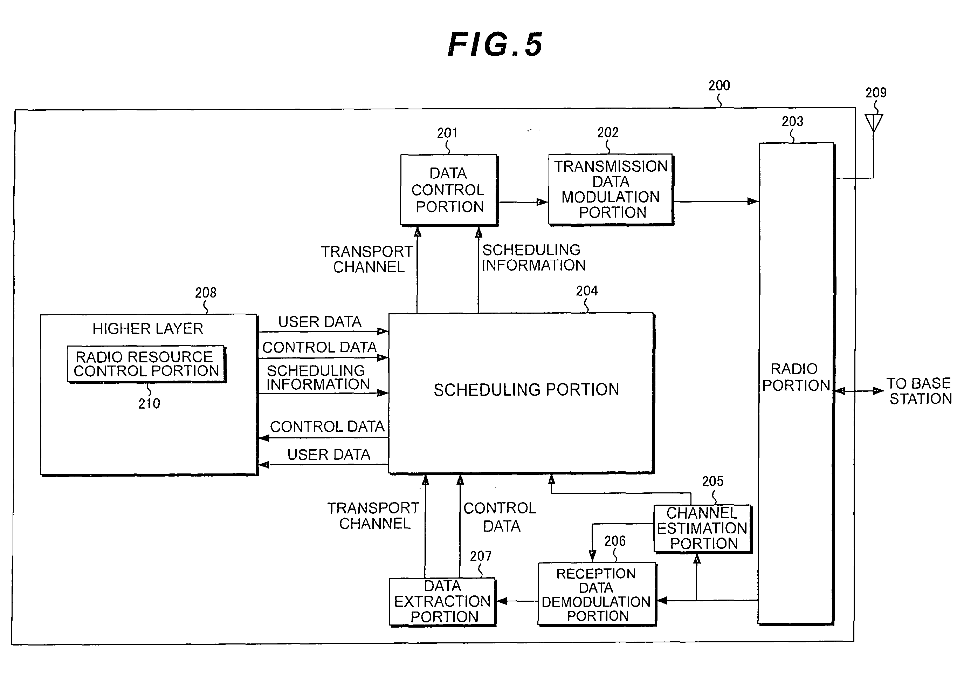

Fig. 5 is a block diagram schematically showing a general configuration of the mobile station apparatus 200 according to an embodiment of the present invention. The mobile station apparatus 200 includes a data control portion 201, a transmission data modulation portion 202, a radio portion 203, a scheduling portion 204, a channel estimation portion 205, a reception data demodulation portion 206, a data extraction portion 207, a higher layer 208 and an antenna 209. Here, the data control portion 201, the transmission data modulation portion 202, the radio portion 203, the scheduling portion 204, the higher layer 208 and the antenna 209 constitute a transmission portion. The radio portion 203, the scheduling portion 204, the channel estimation portion 205, the reception data demodulation portion 206, the data extraction portion 207, the higher layer 208 and the antenna 209 constitute a reception portion.

The data control portion 201, the transmission data modulation portion 202 and the radio portion 203 perform processing on a physical layer in the uplink. The radio portion 203, the channel estimation portion 205, the reception data demodulation portion 206 and the data extraction portion 207 perform processing on a physical layer in the downlink.

The data control portion 201 receives a transport channel from the scheduling portion 204. The transport channel and a signal and a channel generated in the physical layer are mapped to the physical channel based on the scheduling information input from the scheduling portion 204. Each piece of data mapped as described above is output to the transmission data modulation portion 202.

The transmission data modulation portion 202 modulates the transmission data into the OFDM system and/or the SC-FDMA system. The transmission data modulation portion 202 performs, on the data input from the data control portion 201, signal processing such as data modulation, DFT (discrete Fourier transform) processing, sub-carrier mapping, IFFT (inverse fast Fourier transform) processing, CP insertion and filtering, and generates and outputs transmission data to the radio portion 203.

The radio portion 203 up-converts modulation data input from the transmission data modulation portion 202 to a radio frequency to generate a radio signal, and transmits it to the base station apparatus 100 through the antenna 209. The radio portion 203 receives a radio signal modulated with downlink data from the base station apparatus 100 through the antenna 209, down-converts it into a base band singal and outputs reception data to the channel estimation portion 205 and the reception data demodulation portion 206.

The scheduling portion 204 performs processing on a medium access control (MAC) layer. The scheduling portion 204 performs mapping on a logical channel and a transport channel, scheduling on the downlink and the uplink (such as HARQ processing and selection of a transport format) and the like. In the scheduling portion 204, in order to integrally control the processing portions in each physical layer, interfaces are present between the scheduling portion 204 and the antenna 209, the data control portion 201, the transmission data modulation portion 202, the channel estimation portion 205, the reception data demodulation portion 206, the data extraction portion 207 and the radio portion 203 (not shown schematically).

For the scheduling of the downlink, based on the scheduling information (transport format and HARQ retransmission information) from the base station apparatus 100 and the higher layer 208 and the like, the scheduling portion 204 performs reception controls on the transport channel, a physical signal and a physical channel, performs HARQ retransmission control and generates scheduling information used for downlink scheduling. The scheduling information used for the downlink scheduling is output to the data control portion 201.

For the scheduling of the uplink, based on the status of an uplink buffer input from the higher layer 208, the uplink scheduling information (such as transport format and HARQ retransmission information) from the base station apparatus 100 input from the data extraction portion 207, scheduling information input from the higher layer 208 and the like, the scheduling portion 204 performs scheduling processing for mapping an uplink logical channel input from the higher layer 208 on the transport channel and generates scheduling information used for scheduling of the uplink. With respect to the uplink transport format, information notified from the base station apparatus 100 is utilized. The scheduling information described above is output to the data control portion 201.

The scheduling portion 204 maps the uplink logical channel input from the higher layer 208 on the transport channel, and outputs it to the data control portion 201. The scheduling portion 204 also outputs to the data control portion 201 downlink channel state information (CQI, PMI and RI) input from the channel estimation portion 205 and the CRC result input from the data extraction portion 207. The scheduling portion 204 performs processing, as necessary, on the control data input from the data extraction portion 207 and received in the downlink and the transport channel, then maps them on the downlink logical channel and outputs them to the higher layer 208.

In order to demodulate the downlink data, the channel estimation portion 205 estimates the downlink channel state from a downlink reference signal (RS), and outputs the result of the estimation to the reception data demodulation portion 206. In order to notify the base station apparatus 100 of the result of the estimation of the downlink channel state (radio propagation path state), the channel estimation portion 205 estimates the downlink channel state from the downlink reference signal (RS), converts the result of the estimation into the downlink channel state information (such as CQI, PMI and RI) and outputs it to the scheduling portion 204.

The reception data demodulation portion 206 demodulates the reception data modulated in the OFDM system. Based on the result of the estimation of the downlink channel state input from the channel estimation portion 205, the reception data demodulation portion 206 performs demodulation processing on the modulated data input from the radio portion 203, and outputs it to the data extraction portion 207.

The data extraction portion 207 performs CRC on the data input from the reception data demodulation portion 206 to check whether it is right or wrong, and outputs the result of the check (positive response ACK/negative response NACK) to the scheduling portion 204. The data extraction portion 207 separates the data input from the reception data demodulation portion 206 into a transport channel and control data on a physical layer, and outputs them to the scheduling portion 204. The separated control data includes scheduling information such as downlink or uplink resource allocation and HARQ control information on the uplink.

The higher layer 208 performs processing on a packet data convergence protocol (PDCP) layer, a radio link control (RLC) layer and a radio resource control (RRC) layer. In the higher layer 208, in order to integrally control the processing portions in a lower layer, interfaces are present between the higher layer 208 and the scheduling portion 204, the antenna 209, the data control portion 201, the transmission data modulation portion 202, the channel estimation portion 205, the reception data demodulation portion 206, the data extraction portion 207 and the radio portion 203 (not shown schematically).

The higher layer 208 has a radio resource control portion 210 (also referred to as a control portion). The radio resource control portion 210 performs control on various types of setting information, system information, paging, the communication state of the own station, mobility such as handover, a buffer status, the connection setting of unicast and multicast bearers and a mobile station indicator (UEID).

### (First embodiment)

Next, a first embodiment in a mobile communication system using the base station apparatus 100 and the mobile station apparatus 200 is explained. In the mobile communication system in the first embodiment, it is possible to manage the HARQ processing for the downlink transport block transmitted on each carrier component constituting a wider system band across the entire system band. That is, it is possible for the base station apparatus to transmit the transport block for the mobile station apparatus in each of multiple downlink carrier components having a partial bandwidth in the system band, which is the frequency band available, and further to perform the HARQ processing for the transport block transmitted in any one of the downlink carrier components. The mobile station apparatus performs the HARQ processing for the downlink transport block in each uplink carrier component corresponding to the carrier components in which the base station apparatus has transmitted the transport block. At this time, the base station apparatus and the mobile station apparatus perform the HARQ processing using a unified HARQ process number in the system band and the base station apparatus retransmits the downlink transport block using the same carrier component as that used in the initial transmission (first transmission of the transport block) or a different carrier component, and it is possible for the mobile station apparatus to perform the HARQ processing for the downlink transport block retransmitted using the uplink carrier component corresponding to the carrier component in which the downlink transport block is retransmitted.

Further, in the mobile communication system in the first embodiment, it is possible to manage the HARQ processing for the downlink transport block transmitted on each carrier component group consists of multiple carrier components across the entire system band. That is, it is possible for the base station apparatus to transmit the transport block for the mobile station apparatus on each of multiple downlink carrier component groups including multiple downlink carrier components having a partial bandwidth in the system band, which is the frequency band available, and further to perform the HARQ processing for the transport block transmitted in any of the downlink carrier component groups. The mobile station apparatus performs the HARQ processing for the downlink transport block in each uplink carrier component corresponding to the carrier component groups in which the base station apparatus has transmitted the transport block. At this time, the base station apparatus and the mobile station apparatus perform the HARQ processing using a unified HARQ process number in the system band and the base station apparatus retransmits the downlink transport block using the same carrier component group as that used in the initial transmission (first transmission of the transport block) or a different carrier component group and the mobile station apparatus performs the HARQ processing for the downlink transport block retransmitted using the uplink carrier component corresponding to the carrier component group in which the downlink transport block is retransmitted.

Hereinafter, in the first embodiment, the frequency band is defined by the bandwidth (Hz), however, it may also be possible to define the frequency band by the number of resource blocks (RB) consists of frequency and time. The carrier component in the present embodiment indicates a (narrower) frequency band used when the base station apparatus and the mobile station apparatus perform communication in a mobile communication system having a (wider) system band. It is possible for the base station apparatus and the mobile station apparatus to constitute a (wider) system band (for example, a system band having a bandwidth of 100 MHz) and realize high-speed communication (transmission/reception of information) by aggregating multiple carrier components (for example, five frequency bands each having a bandwidth of 20 MHz) (this is also referred to as Spectrum aggregation, Carrier aggregation, Frequency aggregation, etc.). The carrier component indicates each (narrower) frequency band (for example, a frequency band having a bandwidth of 20 MHz) constituting this (wider) system band (for example, a system band having a bandwidth of 100 MHz). That is, a downlink carrier component has a partial bandwidth in the frequency band available for the base station apparatus and an uplink carrier component has a partial bandwidth in the frequency band available for the mobile station apparatus. Further, it may also be possible to define the carrier component as a unit from which a specific physical channel (for example, the PDCCH, the PUCCH, etc.) is configured.

Furthermore, the carrier components themselves that constitute the wider frequency band may be further consists of multiple carrier components. In the present embodiment, the carrier component consists of multiple carrier components (group) is referred to as a carrier component group. For example, in the present embodiment, the wider system band (for example, a system band having a bandwidth of 100 MHz) can be constituted of two carrier component groups (for example, a carrier component group having a bandwidth of 40 MHz and a carrier component group having a bandwidth of 60 MHz), and furthermore, each of these two carrier component groups can be constituted of multiple carrier components. For example, a carrier component group having a bandwidth of 40 MHz can be formed by aggregating two carrier components each having a bandwidth of 20 MHz; a carrier component group having a bandwidth of 60 MHz can be formed by aggregating three carrier components each having a bandwidth of 20 MHz.

The carrier component and/or carrier component group may be allocated in a continuous frequency band or in a non-continuous frequency band and it is possible to constitute a wider system band by aggregating multiple carrier components and/or carrier component groups that are continuous and/or non-continuous frequency bands. Further, it is not necessary for the downlink system band and the uplink system band consists of the carrier component and/or the carrier component group to have the same bandwidth. Even if the downlink system band and the uplink system band have different bandwidths, it is possible for the base station apparatus and the mobile station apparatus to perform communication using these system bands.

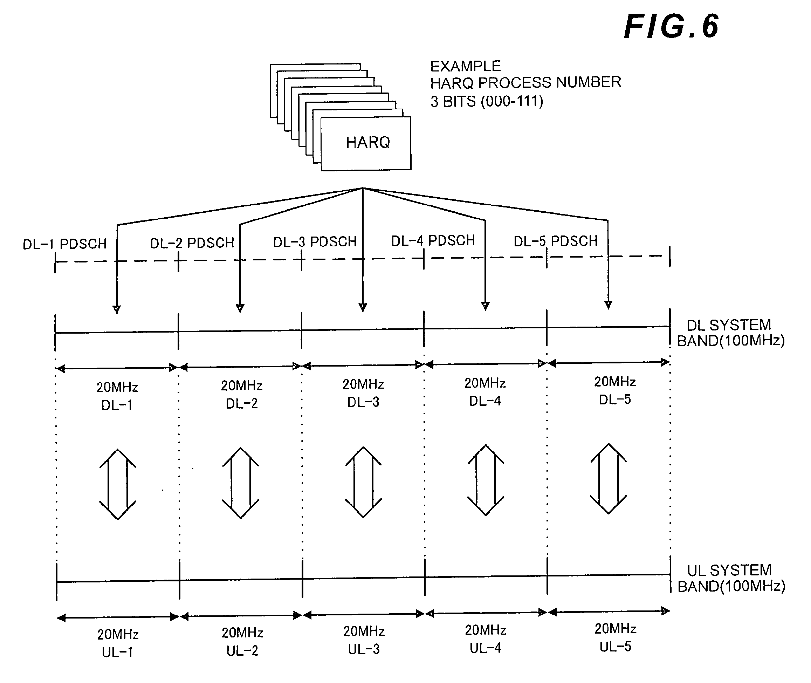

Fig. 6, Fig. 7, and Fig. 8 are diagrams showing examples of mobile communication systems to which the first embodiment can be applied. Fig. 6 shows, as an example for explaining the first embodiment, a downlink system band, that is, a frequency band that aggregates the downlink carrier components in the system. Here, as an example, a system bandwidth having a bandwidth of 100 MHz is shown. Hereinafter, this band is referred to as a "DL system band". Fig. 6 shows that the DL system band is constituted of five carrier components. Specifically, Fig. 6 shows five carrier components DL-1, DL-2, DL-3, DL-4 and DL-5 each having a bandwidth of, for example, 20 MHz.

Further, Fig. 6 shows an uplink system band, that is, a frequency band that aggregates the uplink carrier components in the system. Here, as an example, a system bandwidth having a bandwidth of 100 MHz is shown. Hereinafter, this band is referred to as an "UL system band". Fig. 6 shows that the UL system band is constituted of five carrier components. Specifically, Fig. 6 shows five carrier components UL-1, UL-2, UL-3, UL-4 and UL-5 each having a bandwidth of, for example, 20 MHz.

Here, that the DL system band is constituted of DL-1, DL-2, DL-3, DL-4 and DL-5 can also be interpreted to be that the DL system band can be divided into DL-1, DL-2, DL-3, DL-4 and DL-5. Further, that the UL system band is constituted of UL-1, UL-2, UL-3, UL-4 and UL-5 can also be interpreted to be that the UL system band can be divided into UL-1, UL-2, UL-3, UL-4 and UL-5.

In Fig. 6, the physical downlink shared channels (PDSCH) of the downlink carrier components (DL-1, DL-2, DL-3, DL-4, DL-5), respectively, are denoted by DL-1 PDSCH, DL-2 PDSCH, DL-3 PDSCH, DL-4 PDSCH and DL-5 PDSCH.

As shown in Fig. 6, the base station apparatus and the mobile station apparatus cause the five carrier components (DL-1, DL-2, DL-3, DL-4 and DL-5) constituting the downlink system band and the five carrier components (UL-1, UL-2, UL-3, UL-4 and UL-5) constituting the uplink system band to correspond to each other and perform communication in each combination of the carrier components caused to correspond to each other. Fig. 6 shows that the base station apparatus and the mobile station apparatus cause DL-1, DL-2, DL-3, DL-4 and DL-5 to correspond to UL-1, UL-2, UL-3, UL-4 and UL-5, respectively and perform communication and also show that, for example, the mobile station apparatus transmits, using UL-1, the ACK/NACK of HARQ for the downlink transport block the base station apparatus has transmitted using DL-1.

Here, how the base station apparatus and the mobile station apparatus cause the downlink carrier component and the uplink carrier component to correspond to each other and perform communication can be defied in advance by the specifications etc. Fig. 6 shows that it is defined in advance by the specifications etc. that the base station apparatus and the mobile station apparatus cause DL-1, DL-2, DL-3, DL-4 and DL-5 to correspond to UL-1, UL-2, UL-3, UL-4 and UL-5, respectively and perform communication (the downlink carrier component and the uplink carrier component are caused to correspond to each other in a direction so as to increase their frequencies and communication is performed). Here, for easier understanding of the explanation, such a correspondence is explained, however, the downlink carrier components and the uplink carrier components may be caused to correspond to each other in any way.

In the mobile communication system in the first embodiment, it is possible to manage the HARQ processing for the downlink transport block transmitted on each carrier component constituting a wider system band across the entire system band. Fig. 6 shows, as an example, that the base station apparatus and the mobile station apparatus cause the eight kinds of HARQ processing to operate in parallel and manage the HARQ processing by using 3-bit HARQ process numbers (process numbers from 000 to 111 representing the eight kinds of processing) as unified numbers common in the entire system band. Here, as an example, the HARQ process number is represented by 3 bits (eight kinds of processing), however, the HARQ process number may be represented by any number of bits.

As described above, the base station apparatus and the mobile station apparatus manage the HARQ processing for the downlink transport block transmitted on each carrier component across the entire system band, and use the HARQ process numbers as unified numbers common in the entire system band. That is, it is possible for the base station apparatus to retransmit the downlink transport block to be transmitted to the mobile station apparatus using the same downlink carrier component as that used in the initial transmission or a different carrier component. For example, it is possible for the base station apparatus, when the mobile station apparatus transmits the NACK using UL-1 for the downlink transport block the base station apparatus has transmitted using DL1, to retransmit the downlink transport block using DL-1 again or, to retransmit the downlink transport block using the downlink carrier component (any of DL-2, DL-3, DL-4 and DL-5) different from DL-1.

The mobile station apparatus transmits, to the base station apparatus, the ACK/NACK of HARQ for the retransmitted downlink transport block using the uplink carrier component (any of UL-2, UL-3, UL-4 and UL-5) corresponding to the carrier component in which the downlink transport block has been retransmitted. Similarly, it is possible for the base station apparatus and the mobile station apparatus to perform the retransmission of the downlink transport block by the subsequent HARQ processing using the same carrier component as that used in the initial transmission and the second retransmission or a different carrier component.

In this manner, it is possible to flexibly transmit and receive the transport block having the size that can be transmitted on each carrier component by effectively using the entire system band when the base station apparatus and the mobile station apparatus perform communication by causing each downlink carrier component and each uplink carrier component to correspond to each other and manage the HARQ processing for the downlink transport block transmitted on each carrier component caused to correspond to each other in the entire system band. It is made possible for the base station apparatus to select an appropriate carrier component according to the propagation path state, and transmit the transport block by performing the initial transmission and retransmission of the downlink transport block across the entire system band, and it is possible to transmit the transport block having durability against the fluctuations in the frequency of the propagation path. For example, it is possible to perform the initial transmission of the downlink transport block using DL-1 and the retransmission of the downlink transport block using DL-5 according to the propagation path state (when the propagation path state of DL-1 becomes worse).

Here, the mobile communication system shown in Fig. 6 can also be interpreted to be a mobile communication system in which the downlink system band is divided into multiple carrier components in correspondence with the number (five) of the carrier components constituting the uplink system band (that is, the downlink band is consisted of multiple carrier components). By constituting the downlink system band by the carrier components in the same number as that of the carrier components constituting the uplink system band, it is made possible to simplify the correspondence between the downlink and the uplink carrier components and it is possible to efficiently perform communication between the base station apparatus and the mobile station apparatus.

That is, the mobile communication system shown in Fig. 6 can also be said to be a mobile communication system in which the downlink system band is divided into multiple carrier components in correspondence with the number (five) of the carrier components constituting the uplink system band and the downlink transport block is transmitted by causing the respective carrier components to correspond to each other and at the same time, the HARQ processing for the downlink transport block transmitted on each carrier component caused to correspond to each other is managed across the entire system band and the HARQ process numbers are used as unified numbers common in the entire system band.

Further, as explained above, the mobile communication system shown in Fig. 6 transmits the downlink transport block by causing each downlink carrier component (DL-1, DL-2, DL-3, DL-4 and DL-5) to correspond to each uplink carrier component (UL-1, UL-2, UL-3, UL-4 and UL-5), respectively. That is, it is possible to transmit the downlink transport block in the number up to the number (five) of the downlink carrier components constituting the system band in one subframe (in one TTI). For example, when one subframe (one TTI) is assumed to be 1 ms, in the mobile communication system shown in Fig. 6, it is possible to transmit the downlink transport blocks in the number up to five in 1 ms at the same time.

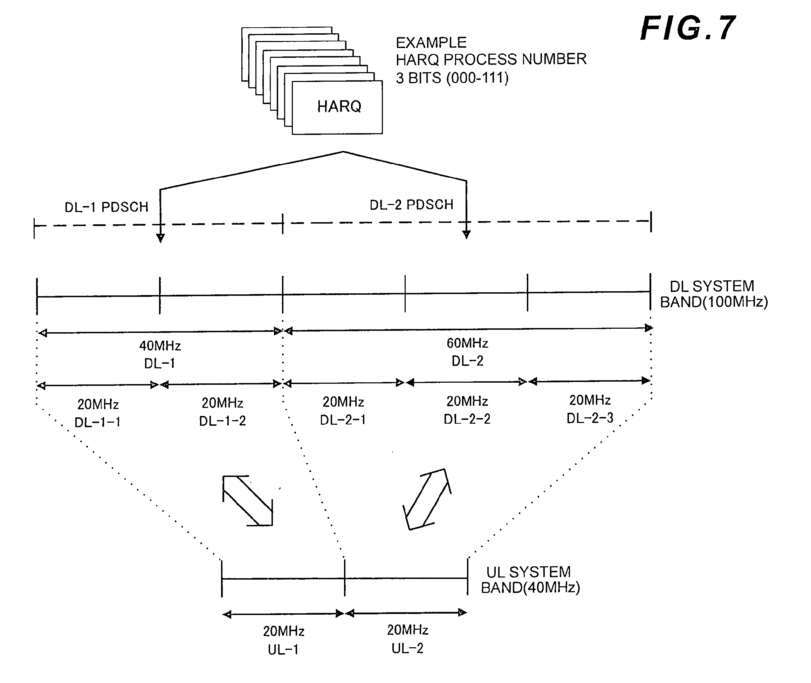

Fig. 7 shows an example of the mobile communication system to which the first embodiment can be applied. As an example for explaining the first embodiment, Fig. 7 shows that the DL system band (a system band having a bandwidth of 100 MHz is shown as an example) is constituted of two carrier component groups (DL-1 and DL-2, carrier component groups having a bandwidth of 40 MHz and a bandwidth of 60 MHz are shown as an example). Further, it is shown that the carrier component group (DL-1) having a bandwidth of 40 MHz is constituted of two carrier components (DL-1-1 and DL-1-2, carrier components each having a bandwidth of 20 MHz are shown as an example) and the carrier component group (DL-2) having a bandwidth of 60 MHz is constituted of three carrier components (DL-2-1, DL-2-2 and DL-2-3, carrier components each having a bandwidth of 20 MHz are shown as an example). In Fig. 7, the physical downlink shared channels (PDSCH) of (allocated on) the downlink carrier component groups (DL-1 and DL-2) respectively are denoted by DL-1 PDSCH and DL-2 PDSCH.

As described above, in the present embodiment, a carrier component consists of multiple carrier components (groups) (including multiple carrier components (groups)) is referred to as a carrier component group.

Further, Fig. 7 shows that the UL system band (a system band having a bandwidth of 40 MHz is shown as an example) is constituted of two carrier components (UL-1 and UL-2, carrier components each having a bandwidth of 20 MHz respectively are shown as an example). Here, that the DL-system band is constituted of DL-1 and DL-2 can also be interpreted to be that the DL-system band can be divided into DL-1 and DL-2. Further, that the UL system band is constituted of UL-1 and UL-2 can also be interpreted to be that the UL system band can be divided into UL-1 and UL2.

As shown in Fig. 7, the base station apparatus and the mobile station apparatus cause the two carrier component groups (DL-1 and DL-2) including multiple carrier components to correspond to the two uplink carrier components (UL-1, UL-2), respectively and perform communication in each combination of the carrier component group and the carrier component caused to correspond to each other. Fig. 7 shows that the base station apparatus and the mobile station apparatus cause DL-1 and DL-2 to correspond to UL-1 and UL-2, respectively and perform communication and also shows that, for example, the mobile station apparatus transmits, using UL-1, the ACK/NACK of HARQ for the downlink transport block the base station apparatus has transmitted using DL-1.

Here, how the base station apparatus and the mobile station apparatus cause the downlink carrier component group and the uplink carrier component to correspond to each other and perform communication is defined in advance by the specifications etc. Fig. 7 shows, as an example, that it is defined in advance by the specifications etc. that the base station apparatus and the mobile station apparatus cause DL-1 and DL-2 to correspond to UL-1 and UL-2, respectively and perform communication (the downlink carrier component group and the uplink carrier component are caused to correspond to each other in a direction so as to increase their frequencies and communication is performed). Here, for easier understanding of the explanation, such a correspondence is explained, however, the downlink carrier component group and the uplink carrier component may be caused to correspond to each other in any way.

In the mobile communication system in the first embodiment, it is possible to manage the HARQ processing for the downlink transport block transmitted on each combination of the downlink carrier component group and the uplink carrier component caused to correspond to each other across the entire system band. Fig. 7 shows, as an example, that the base station apparatus and the mobile station apparatus cause the eight kinds of HARQ processing to operate in parallel and manage the HARQ processing by using 3-bit HARQ process numbers (process numbers from 000 to 111 representing the eight kinds of processing) as unified numbers common in the entire system band. Here, as an example, the HARQ process number is represented by 3 bits (eight kinds of processing), however, the HARQ process number may be represented by any number of bits.

As described above, the base station apparatus and the mobile station apparatus manage the HARQ processing for the downlink transport block transmitted on each combination of the downlink carrier component group and the uplink carrier component across the entire system band, and use the HARQ process numbers as unified numbers common in the entire system band. That is, it is possible for the base station apparatus to retransmit the downlink transport block to be transmitted to the mobile station apparatus using the same downlink carrier component group as that used in the initial transmission or a different carrier component group. For example, it is possible for the base station apparatus, when the mobile station apparatus transmits NACK using UL-1 for the downlink transport block the base station apparatus has transmitted using DL-1, to retransmit the downlink transport block using DL-1 again, or to retransmit the downlink transport block using the downlink carrier component group (DL-2) different from DL-1.

The mobile station apparatus transmits, to the base station apparatus, the ACK/NACK of HARQ for the retransmitted downlink transport block using the uplink carrier component (UL-2) corresponding to the carrier component group in which the downlink transport block is retransmitted. Similarly, it is possible for the base station apparatus and the mobile station apparatus to perform the retransmission of the downlink transport block by the subsequent HARQ processing using the same carrier component group as that used in the initial transmission and the second retransmission or a different carrier component group.

In this manner, it is possible to flexibly transmit and receive the transport block having the size that can be transmitted in each combination of the carrier component group and the carrier component by effectively using the entire system band when the base station apparatus and the mobile station apparatus perform communication by causing each downlink carrier component group and each uplink carrier component to correspond to each other and manage the HARQ processing for the downlink transport block transmitted on each combination of the carrier component group and the carrier component caused to correspond to each other in the entire system band. It is made possible for the base station apparatus to select an appropriate carrier component group according to the propagation path state and transmit a transport block by performing the initial transmission and retransmission of the downlink transport block across the entire system band, and it is possible to transmit the transport block having durability against the fluctuations in the frequency of the propagation path. For example, it is possible to perform the initial transmission of the downlink transport block using DL-1 and the retransmission of the downlink transport block using DL-2 according to the propagation path state (when the propagation path state of DL-1 becomes worse).

Here, the mobile communication system shown in Fig. 7 can also be interpreted to be a mobile communication system in which the downlink system band is divided into multiple carrier component groups in correspondence with the number (two) of the carrier components constituting the uplink system band (that is, the downlink band is constituted of multiple carrier component groups). By constituting the downlink system band by the carrier component groups in the same number as that of the carrier components constituting the uplink system band, it is made possible to simplify the correspondence between the downlink carrier component group and the uplink carrier component and it is possible to efficiently perform communication between the base station apparatus and the mobile station apparatus.

That is, the mobile communication system shown in Fig. 7 can also be said to be a mobile communication system in which the downlink system band is divided into multiple carrier component groups in correspondence with the number (two) of the carrier components constituting the uplink system band and the downlink transport block is transmitted by causing the carrier component group and the carrier component to correspond to each other and at the same time, the HARQ processing for the downlink transport block transmitted on each combination of the carrier component group and the carrier component caused to correspond to each other is managed across the entire system band and the HARQ process numbers are used as unified numbers common in the entire system band.

Further, as explained above, the mobile communication system shown in Fig. 7 transmits the downlink transport block by causing each downlink carrier component group (DL-1, DL-2) to correspond to each uplink carrier component (UL-1, UL-2),respectively. That is, it is possible to transmit the downlink transport block in the number up to the number (two) of the downlink carrier component groups constituting the system band in one subframe (in one TTI). For example, when one subframe (one TTI) is assumed to be 1 ms, in the mobile communication system shown in Fig. 7, it is possible to transmit the downlink transport blocks in the number up to two in 1 ms at the same time.

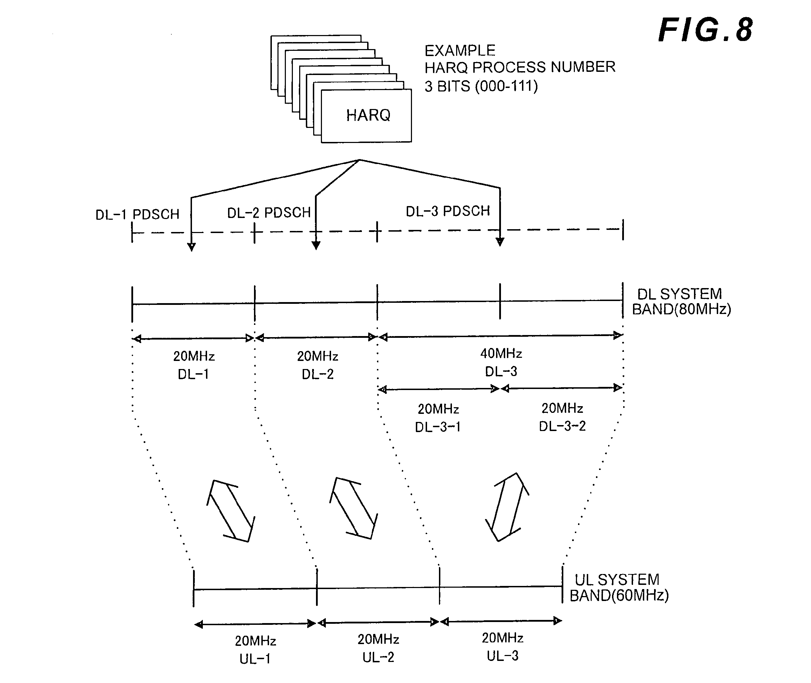

Fig. 8 shows an example of the mobile communication system to which the first embodiment can be applied. As an example for explaining the first embodiment, Fig. 8 shows that the DL system band (a system band having a bandwidth of 80 MHz is shown as an example) is constituted of two carrier components (DL-1 and DL-2, carrier components each having a bandwidth of 20 MHz, respectively are shown as an example) and one carrier component group (DL-3, a carrier component group having a bandwidth of 40 MHz is shown as an example). Further, it is shown that the carrier component group (DL-3) having a bandwidth of 40 MHz is constituted of two carrier components (DL-3-1 and DL-3-2, carrier components each having a bandwidth of 20 MHz, respectively are shown as an example). In Fig. 8, the physical downlink shared channels (PDSCH) of (allocated on) each downlink carrier component and each carrier component group (DL-1, DL-2 and DL-3) are denoted by DL-1 PDSCH, DL-2 PDSCH and DL-3 PDSCH.

Further, Fig. 8 shows that the UL system band (a system band having a bandwidth of 60 MHz is shown as an example) is constituted of three carrier components (UL-1, UL-2 and UL-3, carrier components each having a bandwidth of 20 MHz respectively are shown as an example). Here, that the DL-system band is constituted of DL-1, DL-2 and DL-3 can also be interpreted to be that the DL-system band can be divided into DL-1, DL-2 and DL-3. Further, that the UL system band is constituted of UL-1, UL-2 and UL-3 can also be interpreted to be that the UL system band can be divided into UL-1, UL2 and UL-3.

As shown in Fig. 8, the base station apparatus and the mobile station apparatus cause the downlink carrier component and the carrier component group (DL-1, DL-2, DL-3) to correspond to the uplink carrier component (UL-1, UL-2, UL-3), respectively and perform communication in each combination of the downlink carrier component and the carrier component group and the uplink carrier component caused to correspond to each other. Fig. 8 shows that the base station apparatus and the mobile station apparatus cause DL-1, DL-2 and DL-3 to correspond to UL-1, UL-2 and UL-3, respectively and perform communication and also shows that, for example, the mobile station apparatus transmits, using UL-1, the ACK/NACK of HARQ for the downlink transport block the base station apparatus has transmitted using DL-1.

Here, how the base station apparatus and the mobile station apparatus cause the downlink carrier component and the carrier component group and the uplink carrier component to correspond to each other and perform communication is defined in advance by the specifications etc. Fig. 8 shows, as an example, that it is defined in advance by the specifications etc. that the base station apparatus and the mobile station apparatus cause DL-1, DL-2 and DL-3 to correspond to UL-1, UL-2 and UL-3, respectively and perform communication (the downlink carrier component and the carrier component group and the uplink carrier component are caused to correspond to each other in a direction so as to increase their frequencies and communication is performed). Here, for easier understanding of the explanation, such a correspondence is explained, however, the downlink carrier component and the carrier component group and the uplink carrier component may be caused to correspond to each other in any way.

In the mobile communication system in the first embodiment, it is possible to manage the HARQ processing for the downlink transport block transmitted on each combination of the downlink carrier component and the carrier component group and the uplink carrier component caused to correspond to each other across the entire system band. Fig. 8 shows, as an example, that the base station apparatus and the mobile station apparatus cause the eight kinds of HARQ processing to operate in parallel and manage the HARQ processing by using 3-bit HARQ process numbers (process numbers from 000 to 111 representing the eight kinds of processing) as unified numbers common in the entire system band. Here, as an example, the HARQ process number is represented by 3 bits (eight kinds of processing), however, the HARQ process number may be represented by any number of bits.

As described above, the base station apparatus and the mobile station apparatus manage the HARQ processing for the downlink transport block transmitted on each combination of the downlink carrier component and the carrier component group and the uplink carrier component across the entire system band, and use the HARQ process numbers as unified numbers common in the entire system band. That is, it is possible for the base station apparatus to retransmit the downlink transport block to be transmitted to the mobile station apparatus using the same downlink carrier component and the carrier component group as those used in the initial transmission or a different carrier component and carrier component group.

For example, it is possible for the base station apparatus, when the mobile station apparatus transmits the NACK using UL-1 for the downlink transport block the base station apparatus has transmitted using DL-1, to retransmit the downlink transport block using DL-1 again, or to retransmit the downlink transport block using the downlink carrier component and carrier component group (either DL-2 or DL-3) different from DL-1. The mobile station apparatus transmits, to the base station apparatus, the ACK/NACK of HARQ for the retransmitted downlink transport block using the uplink carrier component (either UL-2 or UL-3) corresponding to the carrier component and the carrier component group in which the downlink transport block is retransmitted. Similarly, it is possible for the base station apparatus and the mobile station apparatus to perform the retransmission of the downlink transport block by the subsequent HARQ processing using the same carrier component and the carrier component group as those used in the initial transmission and the second retransmission or a different carrier component and carrier component group.

In this manner, it is possible to flexibly transmit and receive the transport block having the size that can be transmitted in each combination of the downlink carrier component and the carrier component group and the uplink carrier component by effectively using the entire system band when the base station apparatus and the mobile station apparatus perform communication by causing each downlink carrier component and carrier component group and each uplink carrier component to correspond to each other and manage the HARQ processing for the downlink transport block transmitted on each combination of the downlink carrier component and carrier component group and the uplink carrier component caused to correspond to each other in the entire system band. It is made possible for the base station apparatus to select an appropriate carrier component group according to the propagation path state and transmit a transport block by performing the initial transmission and retransmission of the downlink transport block across the entire system band, and it is possible to transmit a transport block having durability against the fluctuations in the frequency of the propagation path. For example, it is possible to perform the initial transmission of the downlink transport block using DL-1 and the retransmission of the downlink transport block using DL-3 according to the propagation path state (when the propagation path state of DL-1 becomes worse).

Here, the mobile communication system shown in Fig. 8 can also be interpreted to be a mobile communication system in which the downlink system band is divided into multiple carrier components and carrier component groups in correspondence with the number (three) of the carrier components constituting the uplink system band (that is, the downlink band is constituted of multiple carrier components and carrier component groups). By constituting the downlink system band by the carrier components and carrier component groups in the same number as that of the carrier components constituting the uplink system band, it is made possible to simplify the correspondence between the downlink carrier component and carrier component group and the uplink carrier component and it is possible to efficiently perform communication between the base station apparatus and the mobile station apparatus.

That is, the mobile communication system shown in Fig. 8 can also be said to be a mobile communication system in which the downlink system band is divided into multiple carrier components and carrier component groups in correspondence with the number (three) of the carrier components constituting the uplink system band and the downlink transport block is transmitted by causing the downlink carrier component and carrier component group and the uplink carrier component to correspond to each other and at the same time, the HARQ processing for the downlink transport block transmitted on each combination of the downlink carrier component and carrier component group and the carrier component caused to correspond to each other is managed across the entire system band and the HARQ process numbers are used as unified numbers common in the entire system band.

Further, as explained above, the mobile communication system shown in Fig. 8 transmits the downlink transport block by causing each downlink carrier component and carrier component group (DL-1, DL-2, DL-3) to correspond to each uplink carrier component (UL-1, UL-2, UL-3), respectively. That is, it is possible to transmit the downlink transport block in the number up to the number (three) of the downlink carrier components and the carrier component groups constituting the system band in one subframe (in one TTI). For example, when one subframe (one TTI) is assumed to be 1 ms, in the mobile communication system shown in Fig. 8, it is possible to transmit the downlink transport blocks in the number up to three in 1 ms at the same time.

As described above, in the mobile communication system in the first embodiment, it is made possible for the base station apparatus to retransmit the downlink transport block using the same downlink carrier component and/or the carrier component group as those used in the initial transmission or a different carrier component and/or carrier component group by managing the HARQ processing for the downlink transport block transmitted on each combination of the downlink carrier component and/or the carrier component group and the uplink carrier component constituting a wider system band across the entire system band and using the HARQ process numbers as unified numbers common in the entire system band, and it is possible for the base station apparatus and the mobile station apparatus to perform flexible communication that effectively uses the wide system band.

Further, it is possible to transmit the downlink transport block on each combination of the downlink carrier component and/or the carrier component group and the uplink carrier component caused to correspond to each other and to perform communication by effectively using the wider system band without the need for the base station apparatus and the mobile station apparatus to transmit/receive a large-sized transport block for each retransmission.

Here, in order to explain the first embodiment, the three mobile communication systems shown in Fig. 6, Fig. 7, and Fig. 8 are explained as examples, however, the mobile communication systems to which the first embodiment is applied are not limited to this scope, but can be applied to all the mobile communication systems in which a wider system band is constituted of the carrier component and/or the carrier component group. That is, as long as the mobile communication system is one in which the downlink system band and/or the uplink system band is constituted of the carrier component and/or the carrier component group, the system band may have any bandwidth and the carrier component and/or the carrier component group constituting the system band may have any bandwidth. Further, it may also be possible to perform communication by causing the downlink carrier components and/or the uplink carrier components and/or the carrier component groups to correspond to each other in any manner.

### (Second embodiment)

Next, a second embodiment of the present invention is explained. The second embodiment of the present invention can be applied to a mobile communication system in which the downlink system band and/or the uplink system band is constituted of the carrier component and/or the carrier component group, and the HARQ processing for the downlink transport block transmitted on each carrier component and/or carrier component group is managed across the entire system band, a base station apparatus, and a mobile station apparatus like those explained in the first embodiment. Here, as an example, the mobile communication system shown in Fig. 7 is explained, however, the second embodiment can be applied to all the mobile communication systems, the base station apparatuses, and the mobile station apparatuses to which the first embodiment can be applied. In the second embodiment, to make explanation clear, it is represented that the downlink system band is constituted of the carrier component group including multiple carrier components (consists of multiple carrier components), however, when the second embodiment is applied to the mobile communication system as shown in Fig. 6, it is represented that the downlink system band is constituted of the carrier component.

As explained above, in the mobile communication system shown in Fig. 7, the base station apparatus and the mobile station apparatus perform communication by causing the carrier component group constituting the downlink system band and the carrier component constituting the uplink system band to correspond to each other, manage the HARQ processing for the downlink transport block transmitted on each combination of the downlink carrier component group and the uplink carrier component caused to correspond to each other across the entire system band, and use the HARQ process numbers as unified numbers common in the entire system band. Fig. 7 shows that the base station apparatus and the mobile station apparatus cause the eight kinds of HARQ processing to operate in parallel and manage the HARQ processing by using 3-bit HARQ process numbers (process numbers from 000 to 111 representing the eight kinds of processing) as unified numbers common in the entire system band.

The operation of the base station apparatus and the mobile station apparatus is explained below. In Fig. 7, the base station apparatus transmits, to the mobile station apparatus, control information (resources allocation information, MCS information, HARQ processing information, etc.) for transmitting a downlink transport block using the physical downlink shared channel (hereinafter, referred to as "PDSCH") on each downlink carrier component group (DL-1, DL-2) consists of multiple carrier components using the physical downlink control channel (hereinafter, referred to as "PDCCH"), and transmits the downlink transport block using the PDSCH. In Fig. 7, the PDSCH of (allocated on) each downlink carrier component group (DL-1, DL-2) is represented by DL-1 PDSCH, DL-2 PDSCH.

Here, the PDCCH transmitted from the base station apparatus on each downlink carrier component group (DL-1, DL-2), includes redundancy version information (hereinafter, referred to as "RV"), the HARQ process number, a new data indicator (hereinafter, referred to as "NDI"), etc. It may also be possible to determine whether the base station apparatus transmits new data (initially transmitted data) depending on whether the value of NDI is toggled (whether NDI is switched from 0 to 1 or switched from 1 to 0).

The mobile station apparatus that has received these pieces of information from the base station apparatus, performs the HARQ processing for the downlink transport block transmitted on the PDSCH. Specifically, the mobile station apparatus performs CRC for the received downlink transport block and transmits, to the base station apparatus, the ACK/NACK of HARQ according to success/failure of decode for the downlink transport block using the uplink control channel (PUCCH) on each uplink carrier component (UL-1, UL-2) corresponding to each downlink carrier component group (DL-1, DL-2). That is, the mobile station apparatus transmits, by the PUCCH on the corresponding UL-1, the ACK/NACK of HARQ for the downlink transport block transmitted by the PDSCH on DL-1, and transmits, by the PUCCH of the corresponding UL-2, the ACK/NACK of HARQ for the downlink transport block transmitted by the PDSCH of DL-2.

According to the ACK/NACK from the mobile station apparatus, the base station apparatus transmits a new downlink transport block (initial transmission of new data) or retransmits the downlink transport block (previously) transmitted. Here, at the time of retransmission of the downlink transport block, it is possible for the base station apparatus to retransmit the downlink transport block using the same carrier component group as those (DL-1, DL-2) used in the initial transmission (previous transmission) or a different carrier component group. That is, in the mobile communication system shown in Fig. 7, it is possible for the base station apparatus to retransmit, using the PDSCH on DL-1 again, the downlink transport block transmitted by the PDSCH on DL-1 and to retransmit, using DL-2 again, the downlink transport block transmitted by the PDSCH on DL-2. Alternatively, it is possible for the base station apparatus to retransmit, using the PDSCH on DL-2, the downlink transport block transmitted by the PDSCH on DL-1 and to retransmit, using DL-1, the downlink transport block transmitted by DL-2. That is, the downlink transport block transmitted from the base station apparatus to the mobile station apparatus is transmitted by the PDSCH allocated on each carrier component group (DL-1, DL-2).

The mobile station apparatus that has received the downlink transport block retransmitted on the same carrier component group as that used in the initial transmission or a different carrier component from the base station apparatus, transmits the ACK/NACK of HARQ for the retransmitted downlink transport block using the uplink carrier component corresponding to the downlink carrier component group. That is, the mobile station apparatus transmits, using the PUCCH on UL-1, the ACK/NACK of HARQ for the downlink transport block retransmitted using DL-1 and transmits, using the PUCCH of UL-2, the ACK/NACK of HARQ for the downlink transport block retransmitted using DL-2.

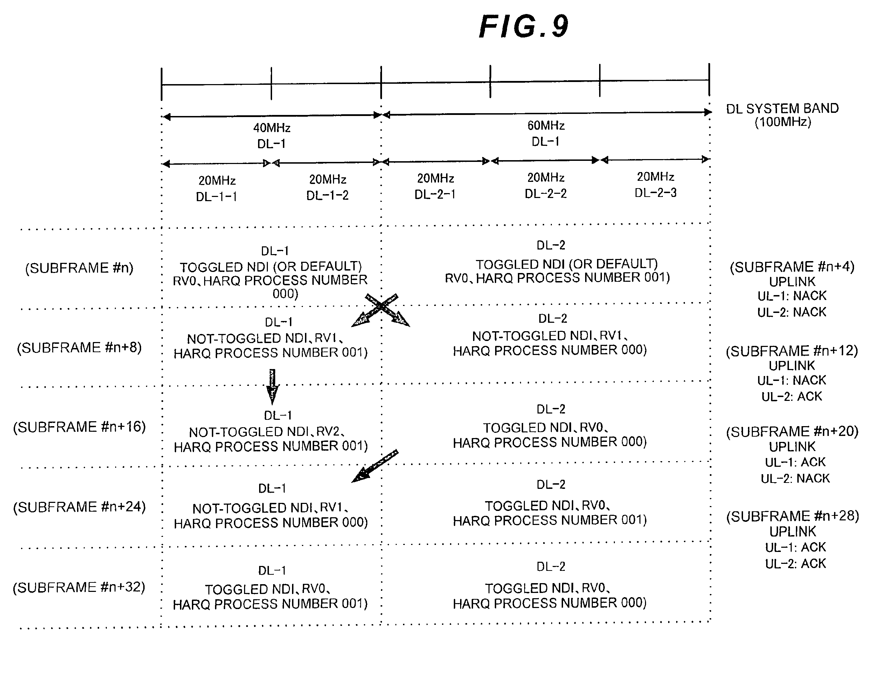

Fig. 9 is a diagram showing an example of the processing procedure of the base station apparatus and the mobile station apparatus in the mobile communication system shown in Fig. 7. As described above, the HARQ processing for the downlink is an asynchronous HARQ (referred to as A-synchronous HARQ), and therefore, it is possible for each HARQ processing to operate in any TTI (Transmission Time Interval), any subframe after the round trip time without depending on the transmission timing of the initially transmitted data. For easier understanding of explanation, Fig. 9 shows that the base station apparatus retransmits the downlink transport block for every eight TTIs.

The example of the processing procedure of the base station apparatus and the mobile station apparatus is explained below using Fig. 9. In subframe #n, the base station apparatus transmits, to the mobile station apparatus, the downlink transport block using the PDSCH (DL-1 PDSCH, DL-2 PDSCH) on each downlink carrier component group (DL-1, DL-2). That is, it is possible for the base station apparatus to transmit the transport blocks in the same number as that of the downlink carrier component groups in the same subframe (subframe #n) (it is possible to perform the initial transmission of the transport block). At this time, the PDCCH transmitted from the base station apparatus on DL-1 includes RV=0, HARQ process number 000, and toggled NDI (or default value). Further, the PDCCH transmitted on DL-2 includes RV=0, HARQ process number 001, and toggled NDI (or default value).

The mobile station apparatus that has received these pieces of information from the base station apparatus, transmits the ACK/NACK of HARQ for the downlink transport block in subframe #n+4 on each uplink carrier component (UL-1, UL-2) corresponding to the downlink carrier component group (DL-1, DL-2) as shown on the right in Fig. 9. That is, it is possible for the mobile station apparatus to transmit the ACK/NACK for the downlink transport blocks in the same number as that of the uplink carrier components in the same subframe (subframe #n+4). Fig. 9 shows that the mobile station apparatus fails in decoding both the transport blocks transmitted on DL-1 and DL-2, respectively, and transmits, to the base station apparatus, the NACK using the PUCCH on UL-1 corresponding to DL-1 and the NACK using the PUCCH on UL-2 corresponding to DL-2.

The base station apparatus that has received the NACK transmitted from the mobile station apparatus on UL-1 and UL-2, respectively, retransmits the (previously) transmitted transport block in subframe #n+8. That is, it is possible for the base station apparatus to retransmit the transport blocks in the same number as that of the downlink carrier component groups in the same subframe (subframe #n+8). Fig. 9 shows that the base station apparatus retransmits the transport block transmitted using the PDSCH on DL-1 by the PDSCH on DL-2 and the transport block transmitted using the PDSCH on DL-2 by the PDSCH on DL-1. At this time, the PDCCH transmitted from the base station apparatus on DL-1 includes not-toggled NDI, RV=1, and HARQ process number 001. The PDCCH transmitted on DL-2 includes not-toggled NDI, RV=1, and HARQ process number 000.

The mobile station apparatus that has received these pieces of information from the base station apparatus, transmits the ACK/NACK of HARQ for the transport block in subframe #n+12 on each uplink carrier component (UL-1, UL-2) corresponding to the downlink carrier component group (DL-1, DL-2) as shown on the right in Fig. 9. Fig. 9 shows that the mobile station apparatus fails in decoding the transport block transmitted on DL-1 and transmits, to the base station apparatus, the NACK using the PUCCH on UL-1 corresponding to DL-1 and succeeds in decoding the transport block transmitted on DL-2 and transmits, to the base station apparatus, the ACK using the PUCCH on UL-2 corresponding to DL-2.

The base station apparatus that has received the NACK on UL-1 and the ACK on UL-2 from the mobile station apparatus, retransmits the (previously) transmitted transport block and transmits a new transport block (initial transmission of new data) in subframe #n+16. That is, it is possible for the base station apparatus to perform the retransmission of the downlink transport block and the initial transmission of the downlink transport in the same subframe (subframe #n+16). Fig. 9 shows that the base station apparatus retransmits the transport block transmitted using the PDSCH on DL-1 by DL-1 again and transmits a new transport block (initial transmission of new data) by DL-2. At this time, the PDCCH transmitted from the base station apparatus by DL-1 includes not-toggled NDI, RV=2, and HARQ process number 001. The PDCCH transmitted by DL-2 includes toggled NDI, RV=0, and HARQ process number 000.

The mobile station apparatus that has received these pieces of information from the base station apparatus, transmits the ACK/NACK of HARQ for the transport block in subframe #n+20 on each uplink carrier component (UL-1, UL-2) corresponding to the downlink carrier component group (DL-1, DL-2) as shown on the right in Fig. 9. Fig. 9 shows that the mobile station apparatus succeeds in decoding the transport block transmitted on DL-1 and transmits, to the base station apparatus, the ACK using the PUCCH on UL-1 corresponding to DL-1 and fails in decoding the transport block transmitted on DL-2 and transmits, to the base station apparatus, the NACK using the PUCCH on UL-2 corresponding to DL-2.

The base station apparatus that has received the ACK in UL-1 and NACK on UL-2 from the mobile station apparatus, transmits a new transport block (initial transmission of new data) and retransmits the transport block (previously) transmitted in subframe #n+24. Fig. 9 shows that the base station apparatus retransmits the transport block transmitted using the PDSCH on DL-2 by PDSCH on DL-1 and transmits a new transport block (initial transmission of new data) on DL-2. At this time, the PDCCH transmitted from the base station apparatus on DL-1 includes non-toggled NDI, RV=1, and HARQ process number 000. The PDCCH transmitted on DL-2 includes toggled NDI, RV=0, and HARQ process number 001.

The mobile station apparatus that has received these pieces of information from the base station apparatus, transmits the ACK/NACK of HARQ for the transport block in subframe #n+28 on each uplink carrier component (UL-1, UL-2) corresponding to the downlink carrier component group (DL-1, DL-2) as shown on the right in Fig. 9. Fig. 9 shows that the mobile station apparatus succeeds in decoding the transport block transmitted on DL-1 and transmits, to the base station apparatus, the ACK using the PUCCH on UL-1 corresponding to DL-1 and succeeds in decoding the transport block transmitted on DL-2 and transmits the ACK, to the base station apparatus, using the PUCCH on UL-2 corresponding to DL-2.

The base station apparatus that has received the ACK on UL-1 and the ACK on UL-2 from the mobile station apparatus, transmits a new transport block (initial transmission of new data) in subframe #n+32 using the PDSCH on each downlink carrier component group (DL-1, DL-2). At this time, the PDCCH transmitted from the base station apparatus on DL-1 includes toggled NDI, RV=0, and HARQ process number 001. The PDCCH transmitted on DL-2 includes toggled NDI, RV=0, and HARQ process number 000.

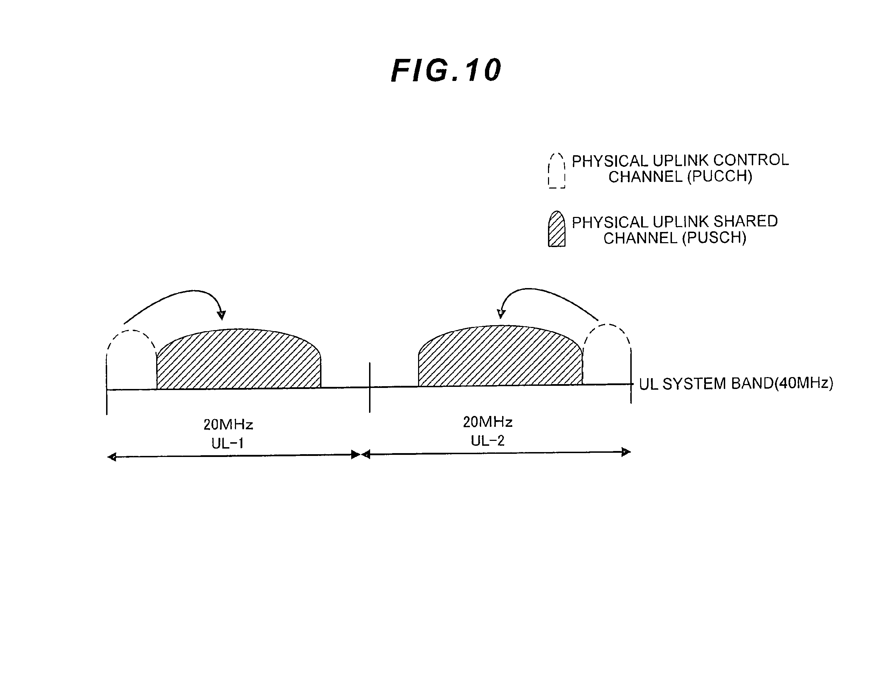

Here, how the mobile station apparatus transmits, using the uplink carrier component (UL-1, UL-2), the ACK/NACK of HARQ for the downlink transport block transmitted from the base station apparatus using the PDSCH on each downlink carrier component group (DL-1, DL-2) is explained using Fig. 10.

Fig. 10 is a diagram showing the UL system band in the second embodiment. As shown in Fig. 10, in the mobile communication system shown in Fig. 7, the physical uplink shared channel (hereinafter, referred to as "PUSCH") represented by oblique lines and the physical uplink control channel (hereinafter, referred to as "PUCCH") represented by dotted lines are allocated in the UL system band used for the uplink communication from the mobile station apparatus to the base station apparatus. Here, the PUSCH and the PUCCH are allocated on each carrier component (UL-1 and UL-2) constituting the UL system band and the PUCCH is allocated dispersedly on each of both end parts (edge parts) on each carrier component. In Fig. 10, for easier understanding of explanation, one PUCCH is described in each uplink carrier component (UL-1, UL-2), however, in the system as a whole, the PUCCH is allocated dispersedly on each of both end parts (edge parts) of the uplink carrier component. Fig. 10 shows an uplink of a certain mobile station apparatus in a certain slot.

As explained above, the mobile station apparatus transmits, to the base station apparatus using PUCCH on each corresponding uplink carrier component (UL-1, UL-2), the ACK/NACK of HARQ for the downlink transport block transmitted from the base station apparatus using the PDSCH on each downlink carrier component group (DL-1, DL-2). That is, the mobile station apparatus transmits the ACK/NACK of HARQ for the transport block transmitted using the PDSCH on DL-1 using the PUCCH on the corresponding UL-1 and the ACK/NACK of HARQ for the transport block transmitted using PDSCH on DL-2 using PUCCH on the corresponding UL-2.

The operation when the base station apparatus allocates resources for the PUSCH on UL-1 and/or UL-2 at this time is further explained using Fig. 10. When attempting to transmit the ACK/NACK of HARQ for the downlink transport block (in the same subframe as that in which the mobile station apparatus attempts to transmit the ACK/NACK of HARQ), if the base station apparatus has allocated the resources for the PUSCH on the corresponding carrier component (UL-1 and/or UL-2), the mobile station apparatus transmits the ACK/NACK using the allocated resources of the PUSCH.

That is, the mobile station apparatus transmits the ACK/NACK using allocated resources of the PUSCH on UL-1 in the same subframe as that in which the mobile station apparatus attempts to transmit the ACK/NACK using the PUCCH on UL-1 if the transmission of the PUSCH on UL-1 is instructed by the base station apparatus. At this time, the mobile station apparatus does not transmit the ACK/NACK using the PUCCH on UL-1. Similarly, the mobile station apparatus transmits the ACK/NACK using the allocated resources of the PUSCH on UL-2 in the same subframe as that in which the mobile station apparatus attempts to transmit the ACK/NACK using the PUCCH on UL-2 if the transmission of the PUSCH on UL-2 is instructed by the base station apparatus. Similarly, at this time, the mobile station apparatus does not transmit the ACK/NACK using PUCCH on UL-2.

The arrows that extend from the PUCCH to the PUSCH shown in Fig. 10 show that when the mobile station apparatus attempts to transmit the ACK/NACK of HARQ for the downlink transport block using the resources of the PUCCH on each uplink carrier component (UL-1, UL-2) corresponding to each downlink carrier component group (DL-1, DL-2) (in the same subframe as that in which the mobile station apparatus attempts to transmit), the base station apparatus allocates resources for the PUSCH, and therefore, the mobile station apparatus transmits, to the base station apparatus, the ACK/NACK using the resources of the PUSCH allocated in the same uplink carrier component as the uplink carrier component in which the PUCCH on which the mobile station apparatus attempts to transmit the ACK/NACK is allocated.

As explained above, in the mobile communication system in the second embodiment, the base station apparatus transmits the downlink transport block using PDSCH on the downlink carrier component and/or the carrier component group, and the mobile station apparatus transmits the ACK/NACK of HARQ for the downlink transport block using the PUCCH or the PUSCH on each uplink carrier component corresponding to each downlink carrier component and/or carrier component group. At this time, the base station apparatus can retransmit the downlink transport block on the carrier component and/or the carrier component group different from the downlink carrier component and/or the carrier component group used in the initial transmission by managing the HARQ processing across the entire system band, and therefore, the base station apparatus and the mobile station apparatus can perform flexible communication that effectively uses a wider system band.

Further, it is possible to transmit the downlink transport block on each combination of the downlink carrier component and/or the carrier component group and the uplink carrier component caused to correspond to each other, and the base station apparatus and the mobile station apparatus can perform communication by effectively using a wider system band without the need to transmit/receive a large-sized transport block for each retransmission.

The mobile communication system according to the present embodiment can employ such a configuration as below. That is, a mobile communication system including a base station apparatus and a mobile station apparatus, is characterized in that the base station apparatus transmits, to the mobile station apparatus, the transport block on each of multiple downlink carrier components having a partial bandwidth in a system band, which is a frequency band available, and performs hybrid automatic repeat request (HARQ) processing for the transmitted transport block in any of the carrier components.

As described above, the base station apparatus transmits, to the mobile station apparatus, the transport block on each carrier component and performs the HARQ processing for the transmitted transport block in any of the carrier components, and therefore the base station apparatus can perform efficient HARQ processing by flexibly using all the carrier components.

Further, the mobile communication system in the present embodiment is a mobile communication system including a base station apparatus and a mobile station apparatus, characterized in that the base station apparatus transmits, to the mobile station apparatus, the transport block on each of multiple downlink carrier component groups including multiple downlink carrier components having a partial bandwidth in a system band, which is a frequency band available, and performs the HARQ processing for the transmitted transport block in any of the carrier component groups.

As described above, the base station apparatus transmits, to the mobile station apparatus, the transport block on each carrier component group and performs the HARQ processing for the transmitted transport block in any of the carrier component groups, and therefore the base station apparatus can perform efficient HARQ processing by flexibly using all the carrier component groups.

In the mobile communication system in the present embodiment, the base station apparatus is characterized by performing the HARQ processing using unified HARQ process numbers in the system band.

As described above, the base station apparatus performs the HARQ processing using the unified HARQ process numbers in the system band, and therefore the base station apparatus can use any carrier component or carrier component group in the system band. Consequently, the base station apparatus can perform efficient HARQ processing by flexibly using all the carrier component groups.

In the mobile communication system in the present embodiment, the base station apparatus is characterized by being capable of transmitting the downlink transport blocks in the number up to the number of the carrier components.

As described above, the base station apparatus is capable of transmitting the downlink transport blocks in the number up to the number of the carrier components, and therefore the base station apparatus can transmit the transport block by flexibly using all the carrier components. As a result, it is made possible to perform efficient HARQ processing.

In the mobile communication system in the present embodiment, the base station apparatus is characterized by being capable of transmitting the downlink transport blocks in the number up to the number of the carrier component groups in one subframe.

As described above, the base station apparatus is capable of transmitting the downlink transport blocks in the number up to the number of the carrier component groups in one subframe, and therefore the base station apparatus can transmit the transport block by flexibly using all the carrier component groups. As a result, it is made possible to perform efficient HARQ processing.

The mobile communication system in the present embodiment is characterized in that the base station apparatus transmits, to the mobile station apparatus, the transport block on each of the downlink carrier components and the mobile station apparatus transmits ACK (Positive Acknowledgement) / NACK (Negative Acknowledgement) of HARQ for the transport block on each of uplink carrier components corresponding to each of the downlink carrier components.

As described above, the base station apparatus transmits, to the mobile station apparatus, the transport block on each downlink carrier component and the mobile station apparatus transmits the ACK/NACK of HARQ for the transport block on each of uplink carrier components corresponding to each of downlink carrier components, and therefore, it is possible to transmit the ACK/NACK of HARQ as well as transmitting the transport block by flexibly using all the carrier components. As a result, it is made possible to perform efficient HARQ processing.

The mobile communication system in the present embodiment is characterized in that the base station apparatus retransmits, to the mobile station apparatus, the transport block on the same downlink carrier component on which the base station apparatus has transmitted the transport block previously or on a different downlink carrier component, and the mobile station apparatus transmits the ACK/NACK of HARQ for the transport block retransmitted on the uplink carrier component corresponding to the downlink carrier component used in the retransmission of the transport block.

As described above, the base station apparatus retransmits, to the mobile station, the transport block apparatus on the same downlink carrier component on which the base station apparatus has transmitted the transport block previously or on a different downlink carrier component, and the mobile station apparatus transmits the ACK/NACK of HARQ for the transport block retransmitted on the uplink carrier component corresponding to the downlink carrier component used in the retransmission of the transport block, and therefore, it is possible to transmit the ACK/NACK of HARQ as well as transmitting the transport block by flexibly using all the carrier components. As a result, it is made possible to perform efficient HARQ processing. For example, when the propagation path characteristics of a certain carrier component are poor, the base station apparatus can retransmit the transport block on another carrier component having excellent propagation path characteristics and the mobile station apparatus can transmit the ACK/NACK of HARQ for the retransmitted transport block using a corresponding carrier component. Hence, it is possible to transmit a transport block having durability against the fluctuations in the frequency of the propagation path.

The mobile communication system in the present embodiment is characterized in that the base station apparatus transmits, to the mobile station apparatus, the transport block on each of the downlink carrier component groups, and the mobile station apparatus transmits the ACK/NACK of HARQ for the transport block on each uplink carrier component corresponding to each of the downlink carrier component groups.

As described above, the base station apparatus transmits, to the mobile station apparatus, the transport block on each downlink carrier component group, and the mobile station apparatus transmits the ACK/NACK of HARQ for the transport block on each uplink carrier component corresponding to each downlink carrier component group, and therefore, it is possible to transmit the ACK/NACK of HARQ as well as transmitting the transport block by flexibly using all the carrier component groups. As a result, it is made possible to perform efficient HARQ processing.

The mobile communication system in the present embodiment is characterized in that the base station apparatus retransmits, to the mobile station apparatus, the transport block on the same downlink carrier component group on which the base station apparatus has transmitted the transport block previously or on a different downlink carrier component group, and the mobile station apparatus transmits the ACK/NACK of HARQ for the transport block retransmitted on the uplink carrier component corresponding to the downlink carrier component group used in the retransmission of the transport block.

As described above, the base station apparatus retransmits, to the mobile station apparatus, the transport block on the same downlink carrier component group on which the base station apparatus has transmitted the transport block previously or on a different downlink carrier component group, and the mobile station apparatus transmits the ACK/NACK of HARQ for the transport block retransmitted on the uplink carrier component corresponding to the downlink carrier component group used in the retransmission of the transport block, and therefore, it is possible to transmit the ACK/NACK of HARQ as well as transmitting the transport block by flexibly using all the carrier component groups. As a result, it is made possible to perform efficient HARQ processing. For example, when the propagation path characteristics of a certain carrier component group are poor, the base station apparatus can retransmit the transport block on another carrier component group having excellent propagation path characteristics and the mobile station apparatus can transmit the ACK/NACK of HARQ for the retransmitted transport block on the carrier component corresponding to the carrier component group. Hence, it is possible to transmit a transport block having durability against the fluctuations in the frequency of the propagation path.

The communication method according to the present embodiment is a communication method of a base station apparatus and a mobile station apparatus, characterized in that the base station apparatus transmits, to the mobile station apparatus, the transport block on each of multiple downlink carrier components having a partial bandwidth of a certain system band, which is a frequency band available, or on each of multiple downlink carrier component groups including multiple downlink carrier components, and performs the HARQ processing for the transmitted transport block in any of the carrier components or the carrier component groups.

As described above, the base station apparatus transmits, to the mobile station apparatus, the transport block on each of carrier components or each of carrier component groups and performs the HARQ processing for the transmitted transport block in any of the carrier components or the carrier component groups, and therefore the base station apparatus can perform efficient HARQ processing by flexibly using all the carrier components or carrier component groups.

In the embodiments explained above, it may also be possible to control the base station apparatus and the mobile station apparatus by recording programs to realize each function in the base station apparatus and each function in the mobile station apparatus to a computer-readable recording medium, causing a computer system to read the programs recorded in the recording medium, and causing the computer system to execute the programs. The "computer system" referred to here is assumed to include an OS and hardware such as peripheral equipment.

The "computer-readable recording medium" refers to a portable medium, such as a flexible disc, magneto-optical disc, ROM, and CD-ROM, and a storage device such as a hard disc incorporated in a computer system. Further, the "computer-readable recording medium" is also assumed to include a network, such as the Internet, a communication line that dynamically holds programs for a short period of time when programs are transmitted therethrough via a communication line, such as a telephone line, and a volatile memory inside a computer system that serves as a server or client in such a case and which holds the programs for a predetermined period of time. The programs may be those which realize part of the functions described above or those which can realize the above-described functions by a combination with programs already recorded in the computer system.

The embodiments of the present invention are described in detail with reference to the drawings as above, however, specific configurations are not limited to these embodiments and designs etc. in the scope not deviating from the gist of the present invention are also included in the scope of claims.

## Claims

1. A mobile communication system in which a base station apparatus (100) and a mobile station apparatus (200) perform communication on multiple component carriers which are aggregated, wherein
said base station apparatus (100) and said mobile station apparatus (200) transmit and receive downlink transport block on each of component carriers, and perform HARQ processing in each of component carriers using a unified HARQ process number in a band consists of said multiple component carriers.

2. A base station apparatus (100) in a mobile communication system in which a base station apparatus (100) and a mobile station apparatus (200) perform communication on multiple component carriers which are aggregated, said base station apparatus (100) comprising:
a unit which transmits and receives, to and from said mobile station apparatus (200), downlink transport block (200) on each of component carriers, wherein
said base station apparatus (100) performs HARQ processing in each of said component carriers using a unified HARQ process number in a band consists of said multiple component carriers.

3. A mobile station apparatus (200) in a mobile communication system in which a base station apparatus (100) and a mobile station apparatus (200) perform communication on multiple component carriers which are aggregated, said mobile station apparatus (200) comprising:
a unit which transmits and receives, to and from said base station apparatus (100), downlink transport block on each of component carriers, wherein
said mobile station apparatus (200) performs HARQ processing in each of said component carriers using a unified HARQ process number in a band consists of said multiple component carriers.

4. A communication method of a base station apparatus (100) in a mobile communication system in which a base station apparatus (100) and a mobile station apparatus (200) perform communication on multiple component carriers which are aggregated, said method comprising:
transmitting and receiving, to and from said mobile station apparatus (200), downlink transport block on each of component carriers; and
performing HARQ processing in each of said component carriers using a unified HARQ process number in a band consists of said multiple component carriers.

5. A communication method of a mobile station apparatus (200) in a mobile communication system in which a base station apparatus (100) and a mobile station apparatus (200) perform communication on multiple component carriers which are aggregated, said method comprising:
transmitting and receiving, to and from said base station apparatus (100), downlink transport block in each of component carriers; and
performing HARQ processing in each of said component carriers using a unified HARQ process number in a band consists of said multiple component carriers.
